# EUROPEAN PATENT APPLICATION

(11) **EP 4 831 122 A1**
(43) Date of publication of application: **28.10.2026**
(21) Application number: 24913144.2
(22) Date of filing: 27.12.2024
(51) Int. Cl.: C01B 32/182, C01B 32/186, H01B 1/04, H01M 4/13, H01M 4/62, H01M 4/139

(54) **CARBON MATERIAL AND METHOD FOR PRODUCING SAME, CONDUCTIVE ASSISTANT, DISPERSION, ELECTRODE COMPOSITION, ELECTRODE SLURRY, ELECTRODE, AND LITHIUM ION SECONDARY BATTERY**

(30) Priority: 28.12.2023 JP 2023223523; 01.05.2024 JP 2024074576; 28.06.2024 JP 2024105173
(71) Applicant: 3DC Inc., Sendai-shi, Miyagi 980-8577 (JP)
(72) Inventor: NISHIHARA, Hirotomo, Sendai-shi, Miyagi 980-8577 (JP); YAMAGUCHI, Togo, Sendai-shi, Miyagi 980-8577 (JP); KAKU, Rikuto, Sendai-shi, Miyagi 980-8577 (JP); TAKASE, Atsushi, Sendai-shi, Miyagi 980-8577 (JP); OMARU, Atsuo, Sendai-shi, Miyagi 980-8577 (JP); KIUCHI, Takashi, Saku-shi, Nagano 385-0051 (JP)
(74) Representative: Winter, Brandl - Partnerschaft mbB
(86) International application number: PCT/JP2024/046487
(87) International publication number: WO 2025/143258

(57) **Abstract**

Provided is a carbon material that exhibits excellent conductivity and exhibits excellent charge/discharge characteristics, battery capacitance characteristics, and rapid discharge characteristics when an electrochemical element electrode is produced therefrom. A carbon material according to the present invention is formed from a carbonaceous outer shell having a graphene structure, and has pores. In the carbon material, the BET specific surface area is in a range of 100-2500 m²/g. The total pore volume measured by nitrogen adsorption/desorption measurement is at least 0.30 cc/g. With respect to the total pore volume, the volume percentage of pores each having a pore diameter of 10 nm or more is at least 30% and the volume percentage of macropores which are pores each having a pore diameter of more than 50 nm is at least 5%. The mode pore diameter is in a meso pore region, which is 2-50 nm.

## Description

### TECHNICAL FIELD

The present invention relates to a carbon material and a method for producing the same, a conductive assistant, a dispersion liquid, a composition for an electrode, a slurry for an electrode, an electrode, and a lithium ion secondary battery.

### BACKGROUND ART

Since its birth, lithium ion secondary batteries have been expanding their applications over a wide range in daily life, such as smartphones and electric vehicles (EV). As a result, in the manufacture of lithium ion secondary batteries, cost competition continues in association with the market's demand for higher performance. In order for EVs with low carbon dioxide (CO₂) emissions to replace gasoline vehicles for the preservation of the global environment, it is necessary to improve the performance of lithium ion secondary batteries to be mounted therein, such as rapid discharge property, long life, high capacity, and charge-discharge property.

Carbon materials are widely used in lithium ion secondary batteries for which such higher performance is demanded. For example, Patent Document 1 (Japanese Unexamined Patent Application, Publication No. 2004-22177) discloses a non-aqueous electrolyte secondary battery including a positive electrode containing a positive electrode mixture, a negative electrode, and a non-aqueous electrolyte, in which the positive electrode mixture contains a positive electrode active material and further contains 1 part by weight or more and 10 parts by weight or less of a conductive agent with respect to 100 parts by weight of the positive electrode active material, the conductive agent contains scaly graphite and carbon black, and a ratio of a weight of the scaly graphite to a sum of weights of the scaly graphite and the carbon black is less than 15% by weight. However, even when such a carbon material is used as a conductive agent, there is a problem that the rapid discharge property and the capacity property are not sufficient.

Patent Document 2 (Japanese Unexamined Patent Application, Publication No. 2019-091587) discloses a carbon material for an energy storage device having a graphene laminated structure, in which a BET specific surface area is 10 m²/g or more and 200 m²/g or less, a pore volume having a diameter of 0.3 nm or more and 1.0 nm or less in a pore size distribution of the carbon material measured in accordance with the HK method is 0.2 mL/g or more, and a DBP absorption (oil absorption) is 150 mL/100 g or more. However, such a carbon material has problems that the electrolyte solution retainability is not sufficient, and the electrical conductivity, the rapid discharge property, the charge-discharge property and the like are not sufficient.

Patent Document 3 (PCT International Publication No. WO 2017/119428) discloses a carbon material for a negative electrode of a secondary battery, which includes a carbonaceous material in which an average layer spacing d002 of a (002) plane determined by an X-ray diffraction method using CuKα radiation as a radiation source is 0.340 nm or more, and a carbon black having a DBP absorption (oil absorption) of 240 mL/100 g or more. However, such a carbon material is inferior in rapid discharge property, and the capacity property and the charge-discharge property are also not sufficient.

Patent Document 4 (Japanese Unexamined Patent Application, Publication No. 2020-100556) discloses a graphene powder in which a specific surface area measured by a BET measurement method is 80 m²/g or more and 250 m²/g or less, and an elemental ratio (O/C) of oxygen to carbon measured by X-ray photoelectron spectroscopy is 0.09 or more and 0.30 or less. However, such a carbon material has insufficient both electron conductivity and ion conductivity, and is inferior in rapid discharge property, capacity property and the like.

Patent Document 5 (Japanese Unexamined Patent Application, Publication No. 2017-183292) discloses a positive electrode for a non-aqueous secondary battery having an active material layer on a current collector, in which the active material layer has a plurality of active material particles and a plurality of graphenes, the active material particles have a layered rock-salt structure, one of the graphenes is in surface contact with the plurality of active material particles and the other one of the graphenes, and an oxygen concentration of the graphenes is 2 atomic % or more and 20 atomic % or less. However, such a positive electrode for a non-aqueous secondary battery still has problems that the electrical conductivity is not sufficient and the rapid discharge property, the capacity property and the like are inferior.

Patent Document 6 (Japanese Unexamined Patent Application (Translation of PCT Application), Publication No. 2023-501558) discloses a porous reduced graphene oxide including mesopores and macropores having a size of 2 nm to 500 nm.

Patent Document 7 (Japanese Unexamined Patent Application, Publication No. 2021-84819) discloses a method for producing a porous carbon material, which includes a coating step of forming a precursor containing graphene on a surface of a template made of nanoparticles of an alkaline earth metal oxide, and a separation and removal step of dissolving the template with an acid not containing fluorine to separate the template and the precursor. However, the carbon material obtained by this production method has not been studied for rapid discharge property, capacity property and charge-discharge property, particularly when used in a lithium ion secondary battery.

Patent Document 8 (PCT International Publication No. WO 2020/080520) discloses a capacitor including at least a positive electrode, a negative electrode, and an electrolyte, in which the positive electrode includes a positive electrode active material, and the negative electrode includes a negative electrode active material, the positive electrode active material and the negative electrode active material include a graphene porous carbon sheet, the graphene porous carbon sheet includes a graphene porous carbon material and carbon nanotubes, the graphene porous carbon material is a porous carbon material made of graphene, a current collector on the positive electrode side and a current collector on the negative electrode side are aluminum materials, the aluminum materials are coated with an amorphous carbon film, and a thickness of the amorphous carbon film is 60 nm or more and 300 nm or less.

Patent Document 9 (Japanese Unexamined Patent Application, Publication No. 2022-191280) discloses a lithium ion battery including a cathode disposed on a first substrate and including a cathode mixture containing the first substrate, LiₓS_{y} (where x is 0 to 2 and y is 1 to 8), and a first granular carbon, an anode disposed on a second substrate and including an anode mixture containing the second substrate, silicon particles, and a second granular carbon, and an electrolyte disposed between the cathode and the anode and containing a solvent and a lithium salt, in which the first granular carbon or the second granular carbon includes a carbon aggregate including a plurality of carbon nanoparticles each of which includes graphene, the graphene in the plurality of carbon nanoparticles includes a maximum of 15 layers, a ratio of carbon to elements other than hydrogen in the carbon aggregate is greater than 99%, a median diameter of the carbon aggregate including the carbon nanoparticles is 0.1 µm to 50 µm, a surface area of the carbon aggregate is 10 to 300 m²/g when measured by a BET method using nitrogen as an adsorbate, and the carbon aggregate has an electrical conductivity of 500 S/m to 20,000 S/m when compressed. However, the carbon aggregate used in such a lithium ion battery is explosively produced in a microwave plasma in a residence time of a raw material gas of 0.001 seconds to approximately 2.0 seconds, and thus has almost no pores.

In particular, the carbon materials described in Patent Documents 1 to 9 have room for further improvement in terms of improving the electrical conductivity and improving the rapid discharge property, the capacity property and the charge-discharge property when used in a lithium ion secondary battery.

### Citation List

### Patent Documents

Patent Document 1: Japanese Unexamined Patent Application, Publication No. 2004-22177
Patent Document 2: Japanese Unexamined Patent Application, Publication No. 2019-091587
Patent Document 3: PCT International Publication No. WO2017/119428
Patent Document 4: Japanese Unexamined Patent Application, Publication No. 2020-100556
Patent Document 5: Japanese Unexamined Patent Application, Publication No. 2017-183292
Patent Document 6: Japanese Unexamined Patent Application (Translation of PCT Application), Publication No. 2023-501558
Patent Document 7: Japanese Unexamined Patent Application, Publication No. 2021-84819
Patent Document 8: PCT International Publication No. WO2020/080520
Patent Document 9: Japanese Unexamined Patent Application, Publication No. 2022-191280

### DISCLOSURE OF THE INVENTION

### Problems to be Solved by the Invention

The present invention has been made in view of such circumstances, and provides a carbon material and a method for producing the same, a conductive assistant, a dispersion liquid, a composition for an electrode, a slurry for an electrode, an electrode, and a lithium ion secondary battery, which have excellent electrical conductivity and can improve a rapid discharge property, a battery capacity property and a charge-discharge property when used in a lithium ion secondary battery.

### Means for Solving the Problems

As a result of intensive studies in view of the above problems, the present inventors have found that a carbon material which is formed by a carbonaceous outer shell having a graphene structure and has pores, has a large BET specific surface area and a large total pore volume, and in which a volume ratio of pores having a pore diameter of 10 nm or more to the total pore volume and a volume ratio of macropores which are pores having a pore diameter exceeding 50 nm are a predetermined value or more, and a peak top diameter (mode pore diameter) is present in a mesopore region of 2 nm or more and 50 nm or less, is excellent in electrical conductivity as a carbon material, and is excellent in rapid discharge property in a 2C maintenance rate, battery capacity property in a charge-discharge test, and a Coulombic ratio (charge-discharge property) when used in a lithium ion secondary battery. That is, the present inventors have found that the electron conductivity of the carbon material can be improved, and a high ion conductivity can be imparted by a structure capable of retaining a large amount of an electrolyte solution, and the rapid discharge property, the battery capacity property and the charge-discharge property of a lithium ion secondary battery can be greatly improved.

The present inventors have also found that by specifying a number per unit mass of the carbon material and an apparent density, an efficient path of electron conductivity can be formed, and moreover, a large amount of an electrolyte solution can be retained and ion conductivity can be highly improved, and the rapid discharge property, the battery capacity property and the charge-discharge property of a lithium ion secondary battery can be further improved. The present inventors have also found that by specifying an ash content in the carbon material, the rapid discharge property, the battery capacity property and the charge-discharge property of a lithium ion secondary battery can be further improved.

The present inventors have further found that a carbon material which is excellent in electrical conductivity and stability, and can highly improve the rapid discharge property, the battery capacity property and the charge-discharge property of a lithium ion secondary battery, can be easily produced by using an agglomerate of a fumed compound as a template.

The present inventors have completed the present invention based on these findings.
(1) A carbon material including: a carbonaceous outer shell having a graphene structure; and pores, in which a BET specific surface area is in a range of 100 m²/g or more and 2500 m²/g or less, a total pore volume measured by nitrogen adsorption-desorption measurement is 0.30 cc/g or more, a volume ratio of pores having a pore diameter of 10 nm or more to the total pore volume is 30% or more, and a volume ratio of macropores which are pores having a pore diameter exceeding 50 nm is 5% or more, and a mode pore diameter is in a mesopore region of 2 nm or more and 50 nm or less.
(2) In the carbon material according to the above (1), an intensity ratio (I_{G}/I_{2D}) of an intensity (I_{G}) of a G band to an intensity (I_{2D}) of a 2D band as measured by Raman spectrometry is in a range of 1.0 or more and 10 or less.
(3) In the carbon material according to the above (1) or (2), a number per unit mass of the carbon material is in a range of 1.0×10¹⁶ particles/g or more and 1.0×10¹⁹ particles/g or less.
(4) In the carbon material according to any one of the above (1) to (3), an apparent density represented by 1/(the total pore volume + 1/true density) is 1.00 g/cc or less.
(5) In the carbon material according to any one of the above (1) to (4), an ash content in the carbon material is 5000 ppm or less.
(6) The carbon material according to any one of the above (1) to (5), which is for use in a lithium ion secondary battery.
(7) A method for producing the carbon material according to any one of the above (1) to (6), the method including forming a carbonaceous layer on a surface of a template made of an agglomerate of a fumed compound, and a removing the template.
(8) A conductive assistant for a battery electrode, which has the carbon material according to any one of the above (1) to (6).
(9) A dispersion liquid having the carbon material according to any one of the above (1) to (6), and a dispersion medium in which the carbon material is dispersed.
(10) A composition for an electrode, which includes the carbon material according to any one of the above (1) to (6), an active material, and a binder.
(11) A slurry for an electrode having the composition for an electrode according to the above (10), and a solvent in which the composition for an electrode is dispersed.
(12) An electrode including the carbon material according to any one of the above (1) to (6).
(13) A lithium ion secondary battery including the carbon material according to any one of the above (1) to (6).

### Effects of the Invention

According to the present invention, a carbon material and a method for producing the same, a conductive assistant, a dispersion liquid, a composition for an electrode, a slurry for an electrode, an electrode, and a lithium ion secondary battery, which have excellent electrical conductivity and can improve a rapid discharge property, a battery capacity property and a charge-discharge property when used in a lithium ion secondary battery, can be provided.

### BRIEF DESCRIPTION OF THE DRAWINGS

FIG. 1 is a transmission electron microscope (TEM) image measured at an acceleration voltage of 80 kV of an example of a carbon material according to an embodiment of the present invention;
FIG. 2 is a transmission electron microscope (TEM) image measured at an acceleration voltage of 100 kV of an example of a carbon material according to an embodiment of the present invention;
FIG. 3 is a transmission electron microscope (TEM) image measured at an acceleration voltage of 100 kV of an example of a carbon material according to an embodiment of the present invention;
FIG. 4 is a diagram showing an example of a Raman spectrum measured for a carbon material according to an embodiment of the present invention;
FIG. 5 is a diagram showing discharge curves with different discharge current values using a test battery of Example 1 according to an embodiment of the present invention; and
FIG. 6 is a diagram showing a relationship of a blending amount of a carbon material with a 2C maintenance ratio and a discharge capacity for test batteries according to Examples. The left vertical axis represents a 2C maintenance rate, the right vertical axis represents a discharge capacity, and the horizontal axis represents a blending amount of the carbon material. In FIG. 6, • represents the 2C maintenance rate, and △ represents the discharge capacity.

### PREFERRED MODE FOR CARRYING OUT THE INVENTION

Hereinafter, embodiments of the present invention will be described in detail.

### <Carbon Material>

The carbon material of the present invention is a carbon material which is formed by a carbonaceous outer shell having a graphene structure and has pores, in which a BET specific surface area is in a range of 10 m²/g or more and 2500 m²/g or less, a total pore volume is 0.30 cc/g or more, a volume ratio of pores having a pore diameter of 10 nm or more to the total pore volume is 30% or more, and a volume ratio of macropores which are pores having a pore diameter exceeding 50 nm is 5% or more, and a mode pore diameter is in a mesopore region of 2 nm or more and 50 nm or less.

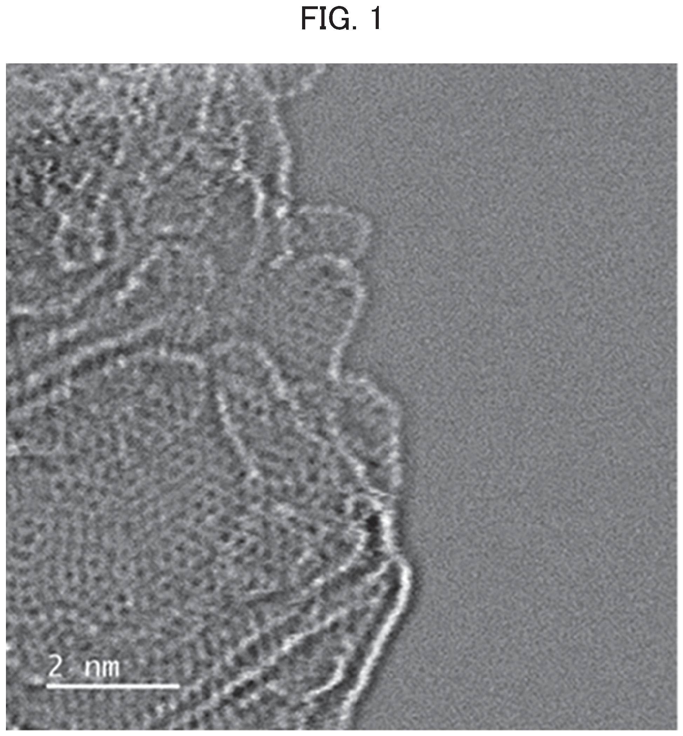

The carbon material of the present invention is formed by a carbonaceous outer shell having a graphene structure, and is excellent in electron conductivity. FIG. 1 shows a TEM image observed at an acceleration voltage of 80 kV using a transmission electron microscope (TEM, model number: JEM-ARM300F, manufactured by JEOL Ltd.). Graphene is a sheet-like material of sp2 bonded carbon, and as shown in FIG. 1, a carbon six-membered ring structure continuously extends in a planar manner to form a honeycomb-like hexagonal lattice structure. Further, that the carbon material of the present invention has a graphene structure can also be confirmed by an intensity ratio (I_{G}/I_{2D}) of an intensity (I_{G}) of a G band to an intensity (I_{2D}) of a 2D band as measure by Raman spectrometry, which will be described later, being 0.4 or more.

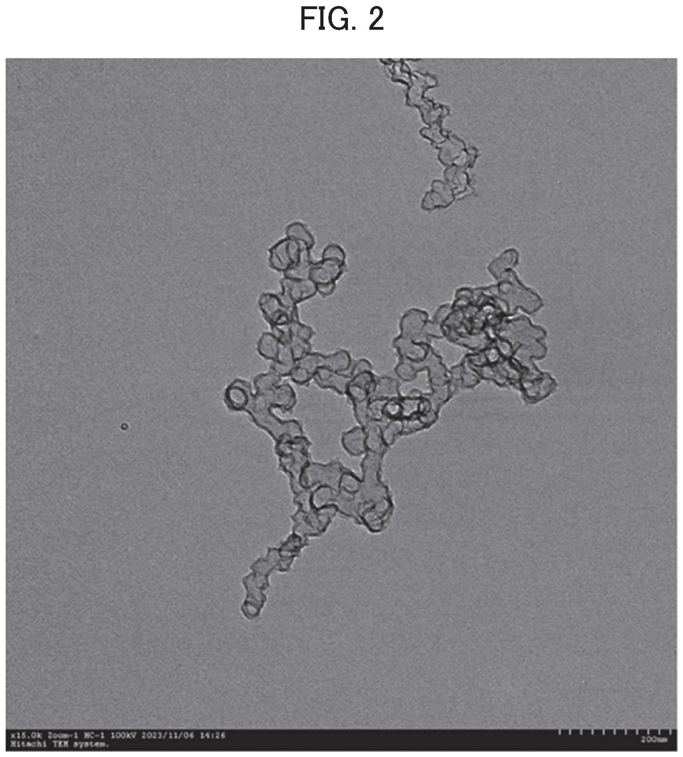

As one embodiment of the carbon material of the present invention, the carbon material has a complex structure. FIG. 2 shows a TEM image of an example of a carbon material according to this embodiment observed at an acceleration voltage of 100 kV and a magnification of 15000 times using a transmission electron microscope (TEM, model number: H-7650, manufactured by Hitachi High-Technologies Corporation). From the degree of transmission of particles in FIG. 2, it can be seen that an inside of a particle shape is hollow. Further, in the carbon material of this embodiment, some branched tips of a combined structure which extends in a linear chain form a ring shape, and the ring shape may or may not have hollow particles having a carbonaceous outer shell connected thereto.

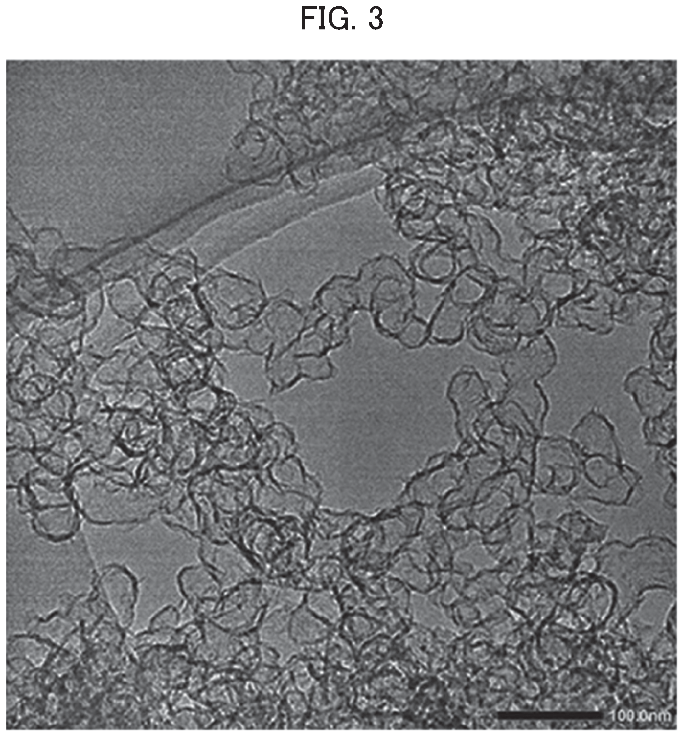

As one embodiment of the carbon material of the present invention, the carbon material has an agglomerate structure in which carbon materials having the above complex structure are assembled. FIG. 3 shows a TEM image of an example of a carbon material according to this embodiment observed at an acceleration voltage of 100 kV and a magnification of 40000 times using a transmission electron microscope (TEM, JEM-2100Plus, manufactured by JEOL Ltd.).

The carbon material of the present invention is formed by a carbonaceous outer shell including a graphene structure having high electron conductivity, as described above, and has pores. Here, one pore enclosed by the carbonaceous outer shell becomes a mesopore, preferably a mesopore having a pore diameter of 10 nm or more, and further, macropores having a pore diameter exceeding 50 nm are formed by a ring shape formed by connecting branched combined structures or inter-branch voids of an agglomerate, and a large BET specific surface area, a large total pore volume, and a high volume ratio for pores having a pore diameter of 10 nm or more and macropores having a pore diameter exceeding 50 nm can be obtained. As a result, it becomes possible to impart ion conductivity that retains a large amount of an electrolyte solution and enables movement of lithium ions. That is, the carbon material of the present invention has both electron conductivity and ion conductivity, and when used as a conductive assistant for a lithium ion secondary battery, the electrical conductivity can be remarkably improved, and the rapid discharge property, the battery capacity property and the charge-discharge property can be improved.

### (BET Specific Surface Area, Pore Volume, Mode Pore Diameter)

The BET specific surface area of the carbon material of the present invention is a BET specific surface area calculated from nitrogen adsorption specified in JIS Z8830, and is in a range of 100 m²/g or more and 2500 m²/g or less, preferably in a range of 100 m²/g or more and 2000 m²/g or less, more preferably in a range of 300 m²/g or more and 1800 m²/g or less, even more preferably in a range of 500 m²/g or more and 1500 m²/g or less, and particularly preferably in a range of 800 m²/g or more and 1200 m²/g or less. When the BET specific surface area of the carbon material of the present invention is in this range, it is suitable in that electron conductivity and ion conductivity can be highly improved.

The total pore volume of the carbon material of the present invention is a value measured by nitrogen adsorption-desorption measurement, and is 0.30 cc/g or more, preferably 0.50 cc/g or more, more preferably 1.00 cc/g or more, even more preferably 1.50 cc/g or more, and particularly preferably 2.00 cc/g or more. On the other hand, an upper limit value of the total pore volume of the carbon material is preferably 20.00 cc/g or less, more preferably 15.00 cc/g or less, even more preferably 10.00 cc/g or less, even more preferably 8.00 cc/g or less, and particularly preferably 7.00 cc/g or less. When the total pore volume of the carbon material becomes excessively small, an electrolyte solution retained in the carbon material becomes small, which is not preferable. Further, when the total pore volume of the carbon material becomes excessively large, a skeleton strength of a pore structure weakens and a pore shape cannot be maintained, which is not preferable. In the carbon material of the present invention, when the total pore volume is as described above, the pore shape has an appropriate strength and contributes to stability of a combined structure.

In the present invention, a mode pore diameter (M), which is a mode value of a pore diameter, is present in a mesopore region of 2 nm or more and 50 nm or less in a pore size distribution curve. Specifically, the mode pore diameter (M) of the carbon material of the present invention is in a range of 2 nm or more and 50 nm or less, preferably in a range of 5 nm or more and 45 nm or less, more preferably in a range of 10 nm or more and 40 nm or less, even more preferably in a range of 12 nm or more and 30 nm or less, and particularly preferably in a range of 15 nm or more and 25 nm or less. When the mode pore diameter (M) of the pore size distribution of the carbon material is in this range, high ion conductivity and electron conductivity can be achieved, which is suitable.

In the carbon material of the present invention, a volume ratio of mesopores, which are pores having a pore diameter in a range of 2 nm or more and 50 nm or less, to the total pore volume is preferably 30% or more, more preferably 35% or more, even more preferably 40% or more, even more preferably 45% or more, and particularly preferably 50% or more. On the other hand, an upper limit value of the volume ratio of mesopores to the total pore volume is preferably 90% or less, more preferably 85% or less, even more preferably 80% or less, even more preferably 75% or less, and particularly preferably 70% or less. When the mesopore volume of the carbon material is in this range, a combined structure of hollow particles has an appropriate strength, contributes to stability of the hollow particles, and the shape is maintained.

In the carbon material of the present invention, a volume ratio of pores having a pore diameter of 10 nm or more is 30% or more, preferably 40% or more, more preferably 50% or more, even more preferably 60% or more, and particularly preferably 70% or more. This enables electron conductivity and ion conductivity to be highly balanced. On the other hand, an upper limit value of the volume ratio of pores having a pore diameter of 10 nm or more to the total pore volume is preferably 95% or less, more preferably 90% or less, and even more preferably 85% or less.

In the carbon material of the present invention, a volume ratio of macropores, which are pores having a pore diameter exceeding 50 nm, to the total pore volume is 5% or more, preferably 10% or more, more preferably 15% or more, even more preferably 20% or more, and particularly preferably 25% or more. On the other hand, an upper limit value of the volume ratio of macropores to the total pore volume is preferably 80% or less, more preferably 70% or less, even more preferably 60% or less, even more preferably 50% or less, and particularly preferably 45% or less. When a volume ratio of macropores (volume ratio of pores exceeding 50 nm) of the carbon material is excessively small, the ion conductivity is inferior, and conversely, when it is excessively large, the strength property of carbonaceous material is inferior, and both are not preferable. The term "micropores" as used herein refers to pores having a pore diameter of less than 2 nm. Further, the term "mesopores" as used herein refers to pores having a pore diameter in a range of 2 nm or more and 50 nm or less. Further, the term "macropores" as used herein refers to pores having a pore diameter exceeding 50 nm.

In the present invention, in order to maintain a pore shape capable of achieving the above ion conductivity and electron conductivity, a number of layers of a carbonaceous layer surrounding pores is important. The number of layers of the carbonaceous layer of the present invention is, for example, 1 layer or more, preferably 1.2 layers or more, more preferably 1.5 layers or more, even more preferably 2 layers or more, and particularly preferably 2.2 layers or more, and an upper limit value is, for example, 15 layers or less, preferably 10 layers or less, more preferably 8 layers or less, even more preferably 6 layers or less, and particularly preferably 5 layers or less. When the number of layers of carbonaceous material is in this range, the strength property and elastic deformation of the carbonaceous material are excellent, a hollow structure of a particle shape and a macropore shape formed by connecting particle shapes can be maintained, and lithium ion secondary battery properties can be highly improved. The number of layers of carbonaceous material of the carbon material is specifically calculated according to the description of Examples described later, but after laminating a carbon layer on template particles, a weight of the carbon layer is calculated using a thermogravimetric analysis (TG) method, a weight of the carbon layer per unit area of the template is calculated from this weight of the carbon layer and a BET specific surface area of the template particles, and this is divided by a weight of the carbon layer per unit area of single-layer graphene (7.61×10⁻⁴ g/m²) to obtain a calculated value.

### (Structural Analysis)

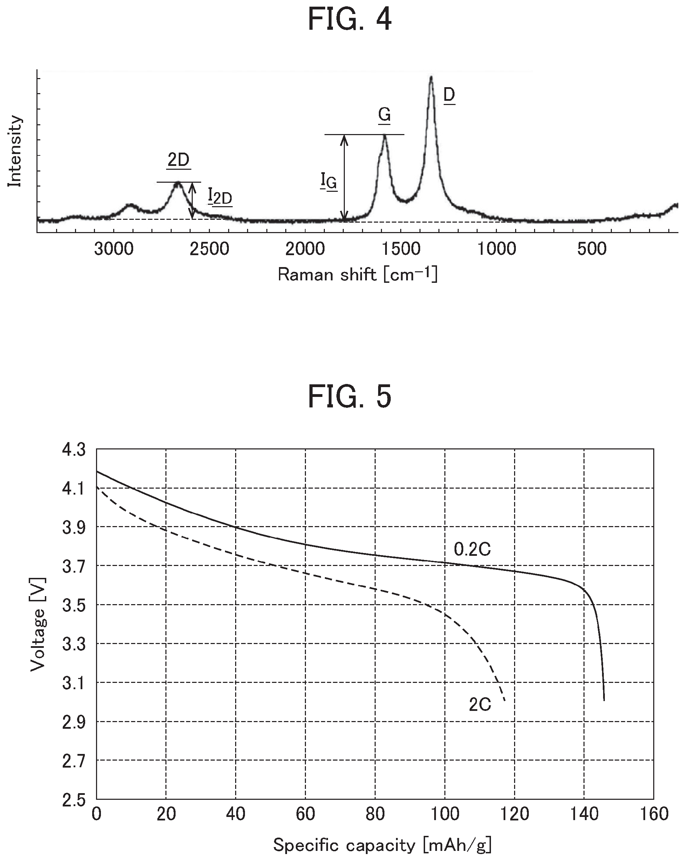

In the present invention, a state of a carbon material can be analyzed by Raman spectroscopy. An example of a Raman spectrum measured for the carbon material of the present invention is shown in FIG. 4. A peak existing in a region around a wave number of 1593 cm⁻¹ in the Raman spectrum is called a G band, and this is a band indicating sp2 bonding (aromatic ring C=C stretching vibration) of a carbon material. A peak existing around a wave number of 1356 cm⁻¹ in the Raman spectrum is called a D band, and this is a band indicating sp3 bonding (C-H stretching vibration) of a carbon material, and increases when sp2 bonding of a carbon six-membered ring structure of a carbonaceous layer is broken to become sp3 bonding. A peak existing in a region around a wave number of 2680 cm⁻¹ in the Raman spectrum is called a 2D band, and is a band indicating secondary phonon scattering (C-H stretching vibration), and is a band indicating a number of stacked layers of a carbon material.

An intensity ratio (I_{G}/I_{2D}) of an intensity (I_{G}) of a G band to an intensity (I_{2D}) of a 2D band of a carbon material is said to be an index indicating a laminated state of graphene layers (D. Graf, et al., NANO LETTERS, 7, 238-242; (2007)). In the same paper, it is stated that a graphene layer becomes one layer when an intensity ratio I_{G}/I_{2D} is 0.2.

In the carbon material of the present invention, an intensity ratio (I_{G}/I_{2D}) of an intensity (I_{G}) of a G band to an intensity (I_{2D}) of a 2D band is, for example, preferably 1.0 or more, more preferably 1.2 or more, and particularly preferably 1.4 or more, and an upper limit value is, for example, preferably in the order of 10 or less, 5.0 or less, 4.5 or less, 4.0 or less, 3.5 or less, 3.0 or less, 2.5 or less, and 2.2 or less. When a value of the intensity ratio I_{G}/I_{2D} of the carbon material is in this range, the strength property and elastic deformability that maintain a hollow structure of the carbon material are balanced, and desired rapid discharge property, capacity property, durability and other properties of a lithium ion secondary battery are highly improved, which is suitable. Further, when the intensity ratio I_{G}/I_{2D} of the carbon material excessively deviates from the lower limit value, generation of graphene quality is insufficient, electron conductivity is reduced, and discharge capacity is reduced, and when it excessively deviates from the upper limit value, a number of stacked graphene layers increases, flexibility is inferior, electrode density is reduced, and filling capacity is reduced, both of which are not preferable.

### (Particle Shape Property)

As one embodiment, the carbon material of the present invention is preferably a combined structure in which hollow particles having the above-described carbonaceous outer shell are connected with a plurality of branched structures.

A particle size distribution curve of the carbon material of the present invention is measured after immersing an unpulverized material in a solvent for 9 minutes, and a difference in cohesive force of a combined structure can be seen.

A median diameter D50 at which half of particles exist in the particle size distribution curve of the carbon material of the present invention is, for example, in a range of 0.5 µm or more and 150 µm or less, preferably in a range of 1 µm or more and 100 µm or less, more preferably in a range of 10 µm or more and 80 µm or less, even more preferably in a range of 15 µm or more and 60 µm or less, and particularly preferably in a range of 20 µm or more and 50 µm or less. When the median diameter D50 of the carbon material is in this range, it is suitable in that electron conductivity and ion conductivity can be highly improved.

A particle diameter D10 at which 10% of particles exist in the particle size distribution curve of the carbon material of the present invention is, for example, in a range of 0.1 µm or more and 100 µm or less, preferably in a range of 0.5 µm or more and 50 µm or less, more preferably in a range of 1 µm or more and 50 µm or less, even more preferably in a range of 5 µm or more and 30 µm or less, and particularly preferably in a range of 10 µm or more and 15 µm or less.

A particle diameter D90 at which 90% of particles exist in the particle size distribution curve of the carbon material of the present invention is, for example, in a range of 5 µm or more and 250 µm or less, preferably in a range of 10 µm or more and 150 µm or less, more preferably in a range of 20 µm or more and 100 µm or less, even more preferably in a range of 30 µm or more and 70 µm or less, and particularly preferably in a range of 40 µm or more and 60 µm or less. When D90 of the carbon material is in this range, it is suitable in that electrical conductivity can be highly improved.

A ratio of D90 to D10 of the carbon material of the present invention is a value of D90/D10, and is, for example, 100 or less, preferably 50 or less, more preferably 25 or less, even more preferably 10 or less, and particularly preferably 5 or less, and a lower limit value is, for example, in a range of 1 or more, preferably 1.5 or more, more preferably 2 or more, even more preferably 2.5 or more, and particularly preferably 3 or more. When D90/D10 of the carbon material is excessively large, cohesiveness is strong and dispersibility is inferior, and electrical conductivity and high functionalization properties of a lithium ion secondary battery are not sufficiently obtained, which is not preferable.

A ratio (D90/M) of D90 to a mode pore diameter (M) of the carbon material of the present invention is a value obtained by dividing a value of D90 [µm] by a mode pore diameter (M) [nm] and multiplying by 1000, and is, for example, in a range of 50 or less, preferably 20 or less, more preferably 10 or less, even more preferably 6 or less, and particularly preferably 4 or less. When a (D90/M) ratio of the carbon material is excessively large, cohesiveness is strong and dispersibility is inferior, and electrical conductivity and high functionalization properties of a lithium ion secondary battery are not sufficiently obtained, which is not preferable.

### (General Properties)

A carbon content of the carbon material of the present invention is, for example, 95% by weight or more, preferably 96% by weight or more, more preferably 97% by weight or more, even more preferably 98% by weight or more, and particularly preferably 99% by weight or more. When the carbon content of the carbon material is excessively small, electron conductivity is inferior, which is not preferable.

An oil absorption of the carbon material of the present invention is, for example, an oil absorption of refined linseed oil measured in accordance with JIS K5101-13-1 (Test methods for pigments-Part 13: Oil absorption-Section 1: Refined linseed oil method), and is, for example, 100 mL/100 g or more, preferably 300 mL/100 g, more preferably 500 mL/100 g or more, even more preferably 800 mL/100 g or more, and particularly preferably 1000 mL/100 g or more, and an upper limit value is, for example, 5000 mL/100 g or less, preferably 4000 mL/100 g or less, more preferably 3500 mL/100 g or less, even more preferably 3000 mL/100 g or less, and particularly preferably 2500 mL/100 g or less.

An oil absorption of the carbon material of the present invention is remarkably higher than that of carbon black which is commonly used as a conductive assistant in lithium ion secondary batteries, and in addition to an amount of an electrolyte solution that can be retained in a space inside hollow particles of a combined structure, an amount of an electrolyte solution that can be retained in gaps that may be formed in portions surrounded by connecting outer shells or in portions surrounded by connecting agglomerate structures is large, lithium ions can be stably supplied, and the rapid discharge property, the charge-discharge property, the battery capacity property and the like of a lithium ion secondary battery can be contributed. When the oil absorption of the carbon material is excessively small, an amount of retained electrolyte solution is small, a delay occurs in supply of ions during a rapid reaction, and discharge capacity is reduced, and conversely, when it is excessively large, structural maintenance of the carbon material is difficult, and an amount of retained electrolyte solution becomes difficult to control, both of which are not preferable.

An electrical conductivity of the carbon material of the present invention is a value at a pressure of 10 MPa, and is, for example, in a range of 1 S/cm or more and 100 S/cm or less, preferably in a range of 5 S/cm or more and 70 S/cm or less, more preferably in a range of 10 S/cm or more and 50 S/cm or less, even more preferably in a range of 15 S/cm or more and 40 S/cm or less, and particularly preferably in a range of 20 S/cm or more and 30 S/cm or less. The electrical conductivity of the carbon material is obtained from a reciprocal of an electrical resistivity. As a method for measuring an electrical resistivity of the carbon material, for example, measurement can be performed in accordance with JIS K1469.

A number per unit mass of the carbon material of the present invention (number density of the carbon material) is a value calculated by a method described later, and is, for example, in a range of 1.0×10¹⁶ particles/g or more and 1.0×10¹⁹ particles/g or less, preferably in a range of 5.0×10¹⁶ particles/g or more and 5.0×10¹⁸ particles/g or less, more preferably in a range of 1.0×10¹⁷ particles/g or more and 3.0×10¹⁸ particles/g or less, and particularly preferably in a range of 2.0×10¹⁷ particles/g or more and 2.0×10¹⁸ particles/g or less. When the number per unit mass of the carbon material is in this range, retainability of an electrolyte solution is optimal, which is preferable.

In the carbon material of the present invention, an apparent density represented by 1/(total pore volume + 1/true density) is a value calculated using a value of a total pore volume described later, and is, for example, 1.00 g/cc or less, preferably 0.80 g/cc or less, more preferably 0.50 g/cc or less, even more preferably 0.34 g/cc or less, and particularly preferably 0.30 g/cc or less, and a lower limit value is, for example, 0.01 g/cc or more, preferably 0.02 g/cc or more, more preferably 0.05 g/cc or more, even more preferably 0.10 g/cc or more, and particularly preferably 0.15 g/cc or more. When the apparent density of the carbon material is in this range, electrical conductivity and electrolyte solution retainability of the carbon material are highly improved, which is suitable.

An ash content in the carbon material of the present invention is, for example, 10,000 ppm or less, preferably 5,000 ppm or less, more preferably 4,000 ppm or less, even more preferably 3,500 ppm or less, even more preferably 3,000 ppm or less, and particularly preferably 2,100 ppm or less. When an ash amount of the carbon material is in this range, stability of an electrolyte solution is excellent, and durability and performance of a lithium ion secondary battery can be improved, which is suitable.

### (Use of Carbon Material)

A use to which this carbon material is applied may be, for example, preferably used as a part of a material for an electrode for a battery such as a lithium ion secondary battery, for example, as a conductive assistant. Further, this carbon material can be included in a conductive assistant, a dispersion liquid, a composition for an electrode, a slurry for an electrode and the like, and using these, the carbon material can be preferably used as a part of a material constituting an electrode for a battery or an electrode for other electronic components. Further, this carbon material can be included in a conductive assistant, a dispersion liquid, a composition for an electrode, a slurry for an electrode and the like, and using these, the carbon material can be preferably used as a part of a material constituting an electrode for a battery or an electrode for other electronic components.

The carbon material of the present invention has electron transfer property possessed by a graphene structure, and has ion conductivity of lithium ions by retaining an electrolyte solution due to having a large pore volume, and is excellent in stability in an electrolyte solution, and therefore, by being contained in an electrode of a lithium ion secondary battery, a function of assisting a battery reaction in a lithium ion secondary battery can be exhibited. Further, one embodiment of the carbon material of the present invention is a combined structure in which hollow particle-shaped materials covered with an outer shell made of carbonaceous material containing graphene are connected, and by having a space inside particle shapes and inside surrounded by a combined structure, an electrolyte solution in which lithium ions are dissolved can permeate and be retained, and ion supply during a reaction is excellent. Therefore, the carbon material of the present invention can suitably assist a secondary battery reaction.

A positive electrode material of a lithium ion secondary battery is a lithium-containing transition metal oxide having low electron conductivity, and is a powder having a particle size distribution. In a conventional method, an electron conduction path is established by mixing a conductive assistant made of a carbon material that assists electron conduction for a battery reaction and a binder resin and fixing them to a current collector by pressurization. Materials other than the binder resin are powder particles, and an electrolyte solution exists in a space existing between particles. Therefore, it has been difficult to actively arrange an electrolyte solution, in other words, lithium ions, in the vicinity of a positive electrode material by conventional technology.

In contrast, in this embodiment, the above-described carbon material is used instead of a conductive assistant that has been conventionally used. The carbon material of this embodiment can retain an electrolyte solution in the space because the carbon material has a space inside an outer shell made of carbonaceous material. The carbon material of this embodiment has a larger space inside as compared with carbon black that has been conventionally used as a conductive assistant. Therefore, it can be said that the carbon material of this embodiment is a material that can simultaneously assist supply of electrons and ions necessary for a battery reaction and can realize a rapid battery reaction.

### <Method for Producing Carbon Material>

Next, a method for producing a carbon material according to the present invention will be described. The method for producing a carbon material of the present invention can be easily produced, for example, by forming a carbonaceous layer on a surface of a template made of an agglomerate of a fumed compound and then removing the template.

### (Template Material)

As a fumed compound used as a template material, for example, a compound obtained by a flame hydrolysis method which is one of dry production methods for inorganic materials may be mentioned. These compounds can be suitably used because primary particles form an agglomerate structure that is complex and extends long.

As a representative example of a fumed compound, fumed silicon dioxide (fumed silica) may be mentioned. Fumed silicon dioxide produced by a flame hydrolysis method does not go through a liquid phase step in its production, and therefore agglomeration is gentle. Therefore, fumed silicon dioxide is excellent in dispersibility in a liquid phase or a compound (solid phase). Fumed silicon dioxide is produced by high-temperature gas-phase hydrolysis of silicon tetrachloride in an oxyhydrogen flame. By changing production conditions such as a temperature of a flame, a supply ratio of oxygen and hydrogen, a raw material supply amount, and a residence time, silicon dioxide particles having an average primary particle diameter of 7 nm to 40 nm and a BET specific surface area of 50 m²/g to 380 m²/g are obtained.

A structure of a fumed compound used in the template of the present invention is preferably a particle structure. An average primary particle diameter of a fumed compound used in the template of the present invention is, for example, 1 nm to 150 nm, preferably 5 nm to 100 nm, more preferably 10 nm to 60 nm, even more preferably 15 nm to 50 nm, and particularly preferably in a range of 20 nm to 40 nm. When the average primary particle diameter of the template material is in this range, a pore volume of 10 nm or more of a carbon material to be produced can be remarkably increased, which is suitable. Further, when the average primary particle diameter of the fumed compound is in this range, handling is easy, and permeability of a raw material gas that becomes a carbon source for a carbonaceous layer becomes good, so that uniform carbon coating becomes easy.

A BET specific surface area of a fumed compound used in the template of the present invention is, for example, in a range of 1 m²/g to 1000 m²/g, preferably 10 m²/g to 500 m²/g, more preferably 20 m²/g to 200 m²/g, even more preferably 40 m²/g to 160 m²/g, and particularly preferably 50 m²/g to 105 m²/g. When the BET specific surface area of the template material is in this range, a pore volume of 10 nm or more of a carbon material to be produced can be remarkably increased, which is suitable.

A BET specific surface area of a carbon material to be produced depends on a BET specific surface area of a template. A ratio of a volume to a surface area of particles serving as a template becomes larger as an average primary particle diameter becomes smaller, and therefore, as an average primary particle diameter of particles becomes smaller, a surface area per volume, that is, a surface area per unit mass becomes larger. Therefore, by using particles of a fumed compound having a small average primary particle diameter, a carbon material having a large BET specific surface area can be obtained.

As a structure of an agglomerate of a fumed compound used as a template in the present invention, it is preferable that the structure is complex and extends long and can realize a higher-order structure, and for example, those having an agglomerate structure in which primary particle diameters are connected in a bead-like manner with a plurality of branched structures are suitable.

A carbon content of a fumed compound used as a template in the present invention is, for example, 0.001% by weight or more, preferably 0.01% by weight or more, more preferably 0.05% by weight or more, even more preferably 0.1% by weight or more, and particularly preferably 0.5% by weight or more, and an upper limit value is, for example, in a range of 5% by weight or less, preferably 4% by weight or less, more preferably 3% by weight or less, even more preferably 2.5% by weight or less, and particularly preferably 2% by weight or less. When the carbon content of the fumed compound is in this range, formation of a carbonaceous layer on a surface of a template becomes easy, which is suitable.

These template materials can be used alone or in combination of two or more thereof.

### (Carbonaceous Layer Forming Step)

In the present invention, formation of a carbonaceous layer on a surface of the template material can be formed by bringing an organic material serving as a carbon source into contact with the template material and performing carbonization heat treatment. Contact with a carbon source and carbonization heat treatment can be performed simultaneously or separately. Contact between the template material and a carbon source is performed, for example, in a temperature range from room temperature to 1000°C. Further, the carbonization heat treatment is performed in a temperature range at which an organic material serving as a carbon source is thermally decomposed, for example, in a temperature range of 400°C to 1000°C.

As a method for bringing a carbon source into contact with a template material, it is preferable to use a gas phase contact method. Here, the gas phase contact method is, for example, a method of introducing a gas of an organic material at high temperature and bringing it into contact with a template material, and as an example thereof, a so-called CVD (Chemical vapor deposition) method may be mentioned.

In a CVD method, it is preferable to perform the method in a temperature range in which a dehydrogenation reaction can proceed, specifically at 400°C to 1000°C, in order to bring an organic compound as a carbon source into contact with the template material and to carbonize the carbon source so as to strongly bond it to the template material.

An organic compound as a carbon source used in a gas phase contact method may be appropriately selected depending on a purpose of use, and for example, hydrocarbons such as saturated hydrocarbons, unsaturated hydrocarbons having a double bond and/or a triple bond, alicyclic hydrocarbons, and aromatic hydrocarbons are suitably used. As saturated hydrocarbons, either linear or branched chains may be used, and examples thereof include methane, ethane, propane and the like. As unsaturated hydrocarbons, either linear or branched chains may be used, and examples thereof include ethylene, propylene, isoprene, acetylene and the like. As alicyclic hydrocarbons, for example, cyclopropane, cyclohexane and the like may be mentioned. As aromatic hydrocarbons, benzene, toluene and the like may be mentioned. Among these hydrocarbons, it is desirable to use methane, ethane, acetylene, ethylene, propylene, benzene and the like, and from a viewpoint of depositing carbon with high crystallinity, methane, propylene, and benzene are preferable. In particular, methane is suitably used from a viewpoint of obtaining carbon with high crystallinity due to a high thermal decomposition temperature.

As an organic compound used in a gas phase contact method, alcohols such as methanol, ethanol, propanol, and butanol, and nitrogen-containing compounds such as acetonitrile and acrylonitrile can also be used.

A reaction temperature in a CVD reaction is appropriately selected depending on a decomposition temperature and the like of an organic compound as the carbon source, and is, for example, in a range of 400°C to 1000°C, preferably 600°C to 950°C, and preferably 800°C to 900°C.

A reaction time in a CVD reaction (CVD treatment time at a predetermined heating temperature) is appropriately selected depending on a type of a template material or an organic compound as a carbon source, or a number of layers of a carbon layer to be deposited, and is, for example, in a range of 0.1 hours to 10 hours, preferably 0.5 hours to 5 hours, and more preferably 1 hour to 3 hours. Further, by applying an analysis method disclosed in this specification and the like, a product can be analyzed, and based on the result, a time required for sufficient carbon deposition can be appropriately set.

A CVD reaction can be performed in an inert gas atmosphere as necessary. As an inert gas, for example, nitrogen, helium, neon, argon and the like may be mentioned, and argon is preferably used. In a CVD method, normally, carbon can be easily adsorbed or deposited on a template material in a gas phase by heating while circulating a gaseous organic compound in contact with the template material together with a carrier gas. A type, a flow rate, a flow amount and a heating temperature of a carrier gas can be appropriately adjusted depending on a type of an organic compound to be used. As a carrier gas, for example, the above inert gas and the like may be mentioned, but a mixture with oxygen gas or hydrogen gas may also be used. Preferably, argon is used as a carrier gas.

A ratio of an introduction amount of an organic compound to a total amount of a carrier gas and an organic compound is preferably adjusted to a range of 1% by volume to 70% by volume, more preferably 5% by volume to 50% by volume, even more preferably 10% by volume to 40% by volume, and particularly preferably 15% by volume to 35% by volume, from a viewpoint of forming an optimal number of layers of graphene layers.

### (Template Removing Step)

Removal of a template after forming a carbonaceous layer may be performed by any method as long as the template is removed and a formed carbonaceous layer remains, and examples thereof include a dissolution method with an acid or an alkali, and preferably a dissolution method with an acid.

As an acid used in the present invention, it is appropriately selected depending on a type of a template material, and examples thereof include hydrochloric acid, sulfuric acid, nitric acid, phosphoric acid, boric acid, hydrofluoric acid and the like, and preferably hydrochloric acid or hydrofluoric acid. An acid concentration to be used for dissolving and removing a template is appropriately adjusted to a range in which dissolution and removal of the template is possible. An amount of acid to be used is not particularly limited as long as dissolution and removal of the template material is possible, and may be, for example, 30 times or more the stoichiometric ratio, or 50 times or more the stoichiometric ratio, with respect to the template material.

A carbon material after template removal can be recovered, for example, by filtration, and then can be washed with pure water. Washing conditions may be appropriately selected, and washing can be terminated after confirming that a pH of a washing liquid has become neutral.

A carbon material after template material removal and after washing can be dried by heating. Heating conditions at this time can be, for example, a drying temperature of 100°C to 200°C and a drying time of 1 hour to 10 hours.

### (Heat Treatment Step)

In the method for producing a carbon material of the present invention, a carbon material after template material removal (separated carbonaceous layer) can be heat-treated as necessary. By heat-treating a carbonaceous layer from which a template material has been removed, crystallinity of carbon is improved and stabilized, and therefore a carbon material having electrical conductivity, corrosion resistance, and/or a large BET specific surface area at a higher level can be produced.

Conditions of a heat treatment step are not particularly limited as long as crystallinity of carbon is improved. A holding temperature of a heat treatment step is, for example, in a range of 1000°C to 3000°C, preferably 1300°C to 2500°C, more preferably 1500°C to 2000°C, even more preferably 1600°C to 1900°C, and particularly preferably 1750°C to 1850°C. When a heat treatment temperature is in this range, it is suitable in that a carbon material having electrical conductivity, corrosion resistance, and/or a large BET specific surface area at a higher level can be obtained. A heat treatment time in a heat treatment step (holding time at a predetermined heat treatment temperature) is, for example, in a range of 0.1 hours to 10 hours, preferably 0.2 hours to 5 hours, and more preferably 0.5 hours to 5 hours. As an atmosphere in a heat treatment step, for example, an inert gas such as argon gas can be used. Further, an atmospheric pressure in a heat treatment step can be, for example, atmospheric pressure or reduced pressure.

Further, by performing a heat treatment step, functional groups bonded to carbon (mainly oxygen-containing functional groups) and carbon chains that do not form a six-membered ring are desorbed when temperature exceeds 1000°C, and dangling bonds are formed. When formed dangling bonds are bonded to another carbon nearby, a surface of a carbon material becomes a state in which functional groups are difficult to be bonded. By heat-treating at 1500°C or more, preferably at 1600°C or more, the carbon material of the present invention can exhibit suitable functions such as electron conductivity and maintenance of an internal space.

By performing these heat treatments, structural defects of graphene constituting the carbonaceous material and portions other than graphene are adjusted. These structural defects include a space generated in an agglomerate structure due to elution of a template material and an infiltration pore generated in an outer shell formed from carbonaceous material. By changing reaction conditions such as heat treatment temperature and heat treatment time, a degree of these structural defects can be adjusted. That is, a size of a space existing inside a carbon material and a size of an infiltration pore for allowing an electrolyte solution to infiltrate into particles can be adjusted.

Thus, the carbon material of the present invention can be easily produced.

### <Dispersion Liquid>

Next, a dispersion liquid according to the present invention will be described. The dispersion liquid of the present invention is obtained by dispersing the carbon material in a dispersion medium. The dispersion liquid may contain a dispersant for improving dispersibility of the carbon material as necessary.

As a dispersion medium used in the present invention, it is selected depending on a purpose of use, and for example, an organic or inorganic dispersant can be suitably used in order to maintain a dispersion state of powder in a solvent in a good state. When used for production of a lithium ion secondary battery, a polar solvent is suitably used, and from a viewpoint of affinity with a binder polymer, N,N-dimethylformamide, N-methylpyrrolidone (NMP), N,N-dimethylacetamide, and water are preferable, and it is more preferable to include N-methylpyrrolidone (NMP) in particular. NMP is suitable for dispersibility of a carbon material containing graphene.

### <Composition for Electrode, Slurry for Electrode, and

### Electrode>

Next, a composition for an electrode, a slurry for an electrode, and an electrode according to the present invention will be described.

An electrode including the carbon material of the present invention, preferably an electrode for a lithium ion secondary battery, is suitable in that it is excellent in rapid discharge property, capacity property and charge-discharge property. In order to produce such an electrode, it is useful to use a composition for an electrode and a slurry for an electrode containing the carbon material of the present invention.

### (Composition for Electrode)

The composition for an electrode of the present invention includes the carbon material of the present invention, an active material, and a binder.

As an active material used in the present invention, for example, an active material used for a positive electrode described later, an active material used for a negative electrode described later and the like can be mentioned. A use ratio of an active material and the carbon material of the present invention is appropriately selected depending on a purpose of use, and is, as a ratio of the carbon material of the present invention to 100 parts by weight of an active material, for example, in a range of 0.005 parts by weight to 20 parts by weight, preferably 0.01 parts by weight to 10 parts by weight, more preferably 0.05 parts by weight to 5 parts by weight, even more preferably 0.1 parts by weight to 2 parts by weight, and particularly preferably 0.5 parts by weight to 1 part by weight.

As a binder used in the present invention, for example, a binder used for a positive electrode described later, a binder used for a negative electrode and the like may be mentioned. An amount of a binder to be used is appropriately selected depending on a purpose of use, and is, with respect to 100 parts by weight of an active material, for example, in a range of 0.05 parts by weight to 10 parts by weight, preferably 0.1 part by weight to 8 parts by weight, more preferably 0.5 parts by weight to 6 parts by weight, even more preferably 1 part by weight to 5 parts by weight, and particularly preferably 2 parts by weight to 4 parts by weight.

As a composition for an electrode of the present invention, other compounding agents can be added as necessary in addition to the carbon material of the present invention, an active material, and a binder. As other compounding agents, those usually used for an electrode composition of a lithium ion secondary battery are used, and an amount to be used is, with respect to 100 parts by weight of an active material, for example, 20 parts by weight or less, preferably 15 parts by weight or less, more preferably 10 parts by weight or less, even more preferably 5 parts by weight or less, and particularly preferably 2 parts by weight or less.

As a mixing method for a composition for an electrode of the present invention, for example, a dry mixing method, a wet mixing method using a dispersion medium and the like can be mentioned.

### (Slurry for Electrode)

A slurry for an electrode of the present invention is obtained by mixing the composition for an electrode by a wet mixing method using a dispersion medium. As a dispersion medium to be used, any dispersion medium may be used as long as it can dissolve or disperse a binder, and a dispersion medium used for a positive electrode described later, a dispersion medium used for a negative electrode described later, and a dispersion medium used for a dispersion liquid containing the carbon material of the present invention described above and the like are used. An amount of a dispersion medium to be used may be an appropriate amount, and is adjusted so that a slurry for an electrode in a next step has a viscosity that can be applied onto a current collector.

As a method for producing a slurry for an electrode of the present invention, for example, a method of mixing an active material after mixing the carbon material of the present invention, a binder, and a dispersion medium and the like can be mentioned. In mixing the carbon material of the present invention, a binder, and a dispersion medium, there are a method of mixing a binder in a dispersion liquid containing the carbon material, a method of mixing a dispersion liquid containing the carbon material with a binder liquid obtained by dissolving or dispersing a binder in a dispersion medium, and the like.

As a mixing method, a known mixer or kneader can be used. As a known mixer, an automatic mortar, a homogenizer, a planetary mixer, a homodisper, a rotation and revolution mixer and the like may be mentioned, and a planetary mixer is particularly preferable.

### (Electrode)

An electrode of the present invention may be either a negative electrode or a positive electrode, and can be obtained by applying the slurry for an electrode on a current collector and then drying. As a current collector, either one used for a positive electrode described later or one used for a negative electrode may be used.

As a method for applying a slurry for an electrode onto a current collector, the method is not particularly limited and a known method can be used. Specifically, application can be performed using a Baker-type applicator, a film applicator with a micrometer, a bar coater, a doctor blade and the like manually or using an automatic coating machine. As a drying method, the method is not particularly limited and a known method can be used, and for example, drying by warm air, hot air, or low-humidity air, vacuum drying, drying by irradiation with infrared rays or electron beams and the like may be mentioned. After a drying step, a pressing treatment may be performed on an electrode composite layer using a die press or a roll press and the like. By a pressing treatment, a positive electrode composite layer can be adhered well to a current collector.

### <Positive Electrode>

A positive electrode will be described. A positive electrode is generally obtained by applying a slurry obtained by mixing a positive electrode active material, a conductive assistant that assists electron conductivity, a binder, and a solvent onto a current collecting metal foil such as a rolled aluminum foil to form a coating film, heating and drying to remove the solvent, and then forming the resultant into a predetermined dimension and density. The carbon material of the present invention can be usefully used as a conductive assistant.

### (Positive Electrode Active Material)

As a positive electrode active material, a compound capable of reversible intercalation and deintercalation of lithium is used, and specifically, a lithium composite metal oxide containing lithium and one or more metals such as cobalt, manganese, nickel, or aluminum may be included.

Specific examples of a positive electrode active material include lithium-manganese-based oxides (for example, LiMnO₂, LiMn₂O₄ and the like), lithium-cobalt-based oxides (for example, LiCoO₂ and the like), lithium-nickel-based oxides (for example, LiNiO₂ and the like), lithium-nickel-manganese-based oxides (for example, LiNi₁₋ₐMnₐO₂ (where 0<a<1), LiMn_{2-b}NibO₄ (where 0<b<2) and the like), lithium-nickel-cobalt-based oxides (for example, LiNi_{1-c}Co_{c}O₂ (where 0<c<1) and the like), lithium-manganese-cobalt-based oxides (for example, LiCo_{1-d}Mn_{d}O₂ (where 0<d<1), LiMn₂₋ₑCoₑO₄ (where 0<e<2) and the like), lithium-nickel-manganese-cobalt-based oxides (for example, Li(Ni_{f}Co_{g}Mnₕ)O₂ (where 0<f<1, 0<g<1, 0<h<1, f+g+h=1) or Li(NiⱼCoₖMnₘ)O₄ (where 0<j<2, 0<k<2, 0<m<2, j+k+m=2) and the like), or lithium-nickel-cobalt-transition metal (M) oxides (for example, Li(NiₚCo_{q}MnᵣMₛ)O₂ (where M is selected from the group consisting of Al, Fe, V, Cr, Ti, Ta, Mg and Mo, and p, q, r and s are atomic fractions of respective independent elements, and 0<p<1, 0<q<1, 0<r<1, 0<s<1, p+q+r+s=1) and the like) and the like, and any one or two or more of these compounds may be included. Among these, LiCoO₂, LiMnO₂, LiNiO₂, lithium nickel manganese cobalt oxides (for example, Li(Ni_{0.6}Mn_{0.2}Co_{0.2})O₂, Li(Ni_{0.5}Mn_{0.3}Co_{0.2})O₂, or Li(Ni_{0.8}Mn_{0.1}Co_{0.1})O₂ and the like), or lithium nickel cobalt aluminum oxides (for example, LiNi_{0.8}Co_{0.15}Al_{0.05}O₂ and the like) and the like are preferable from a viewpoint that capacity property and stability of a battery can be improved.

As a positive electrode active material, as a material having high stability, a lithium atom-containing oxide (olivine-type lithium-containing phosphoric acid compound) represented by the following general formula (1) and having an olivine-type crystal structure may also be mentioned.

Li₁₋ₓMₓ(AO₄) (1)

(In formula (1), M is an ion of at least one metal selected from the group consisting of Mg, Ti, V, Nb, Ta, Cr, Mn, Fe, Co, Ni, Cu, Zn, Al, Ga, Ge and Sn, A is at least one selected from the group consisting of Si, S, P and V, and x is a number satisfying a relationship of 0<x<1.)
A value of x in the general formula (1) is selected so that a valence of the entire general formula (1) becomes 0 valence, depending on valences of M and A.

Specific examples of olivine-type lithium-containing phosphoric acid compounds include LiFePO₄, LiCoPO₄, LiMnPO₄, Li_{0.90}Ti_{0.05}Nb_{0.05}Fe_{0.30}Co_{0.30}Mn_{0.30}PO₄ and the like. Among these, LiFePO₄ (lithium iron phosphate) in particular is preferable because an iron compound as a raw material is easily available and inexpensive.

As a positive electrode active material, organic compounds such as polyaniline, polypyrrole, polyacene, disulfide-based compounds, polysulfide-based compounds, and N-fluoropyridinium salts can also be used.

Physical properties of a positive electrode active material are determined from requirement items in battery design and a manufacturing process due to constraint conditions such as a use form of a lithium ion battery and the like. In manufacturing a positive electrode material, process design and the like are made so as to realize the physical properties. As physical property values, powder particle diameter and distribution, BET specific surface area, density and the like may be mentioned.

As an example, a powder particle diameter is appropriately selected in consideration of other constituent requirements of a lithium ion battery, and from a viewpoint of improving battery properties such as rate property and cycle property, for example, 1 µm to 30 µm is preferable and 1 µm to 10 µm is more preferable as an average value.

These positive electrode active materials can be used alone or in combination of two or more thereof.

### (Positive Electrode: Conductive Assistant)

Since the positive electrode active material has generally low electron conductivity, it is preferable to coexist a conductive assistant that assists electron conductivity in the positive electrode, and the carbon material of the present invention is suitably used. An amount of the carbon material of the present invention to be used is appropriately selected depending on a purpose of use, and is, with respect to 100 parts by weight of a positive electrode active material, for example, in a range of 0.01 parts by weight to 4 parts by weight, preferably 0.05 parts by weight to 3 parts by weight, more preferably 0.1 parts by weight to 2 parts by weight, even more preferably 0.2 parts by weight to 1.5 parts by weight, and particularly preferably 0.5 parts by weight to 1.5 parts by weight.

In the present invention, as a conductive assistant, other conductive materials can be combined in addition to the carbon material of the present invention. As other conductive materials, for example, carbon-based materials such as graphite, carbon black, carbon nanotubes, acetylene black, Ketjen black, channel black, furnace black, lamp black, and thermal black; conductive fibers such as carbon fibers and metal fibers; fluorinated carbon, metal powders such as aluminum powder and nickel powder; conductive whiskers such as zinc oxide and potassium titanate; conductive metal oxides such as titanium oxide; and conductive materials such as polyphenylene derivatives can be mentioned.

These other conductive materials can be used alone or in combination of two or more thereof, and an amount of other conductive materials to be used is appropriately selected depending on a purpose of use, and is appropriately selected within a use range of the carbon material of the present invention. A use ratio of the carbon material of the present invention and other conductive materials is appropriately selected depending on a purpose of use, and is, as a weight ratio of [carbon material of the present invention]:[other conductive materials], for example, in a range of 10:90 to 90:10, preferably 20:80 to 80:20, more preferably 30:70 to 70:30, and even more preferably 40:60 to 60:40.

Further, among the above, the carbon material of the present invention can obtain a further effect by combining with a conventionally used conductive assistant. For example, carbon blacks such as acetylene black are composed of connection of structural particles having a diameter of several tens of nanometers. On the other hand, crystallinity of carbon is not so high, a structural length is also short, and since it is fragile, long-distance electron transfer is poor. By combining with the carbon material of the present invention, a system that retains electron conductivity and also has an ion supply capability can be realized even in a state in which a three-dimensional structure is retained or in a state in which a three-dimensional structure is crushed and flattened like scaly graphite.

### (Positive Electrode: Binder)

As a binder to be used, it is a component that aids in bonding among a positive electrode active material, a conductive assistant, and an electrode current collector, and for example, an organic polymer is used. For example, fluorine-based resins such as polyvinyl fluoride, polyvinylidene fluoride (PVDF), and polytetrafluoroethylene, nitrile group-containing polymers such as polyacrylonitrile and polyvinylidene cyanide, polyvinyl alcohol-based polymers such as polyvinyl acetate and polyvinyl alcohol, halogen-containing polymers such as polyvinyl chloride and polyvinylidene chloride, conductive polymers such as polyaniline, alkane-based polymers such as polyethylene, polypropylene, and poly-1,1-dimethylethylene, unsaturated polymers such as polybutadiene and polyisoprene, polymers having a ring such as polystyrene, polymethylstyrene, polyvinylpyridine, and poly-N-vinylpyrrolidone, acrylic polymers such as polymethyl methacrylate, polyethyl methacrylate, polybutyl methacrylate, polymethyl acrylate, polyethyl acrylate, polyacrylic acid, polymethacrylic acid, and polyacrylamide and the like may be mentioned. Further, it may be a modified product or a derivative of the organic polymer.

Among these binders, fluorine-based resins are preferable, and PVDF is particularly preferable.

These binders can be used alone or in combination of two or more thereof, and an amount to be used is appropriately selected depending on a purpose of use, and is, with respect to 100 parts by weight of a positive electrode active material, for example, in a range of 0.01 parts by weight to 4 parts by weight, preferably 0.05 parts by weight to 3 parts by weight, more preferably 0.1 parts by weight to 2 parts by weight, even more preferably 0.2 parts by weight to 1.5 parts by weight, and particularly preferably 0.5 parts by weight to 1.5 parts by weight. When an amount of a binder to be used is in this range, an adhesive force between electrode active materials and between an electrode active material and a conductive assistant can be improved, and consequently a bonding force with an electrode current collector can be improved, which is suitable.

### (Positive Electrode: Slurry)

As a slurry for electrode formation to be used, the positive electrode active material, a conductive assistant, a binder, and other compounding agents as necessary are blended and mixed with a dispersion medium. As other compounding agents, they are appropriately selected depending on a purpose of use, and those usually used in lithium ion secondary batteries can be used in a normal use range.

As a dispersion medium to be used, for example, one that dissolves only a binder and does not dissolve other materials can be suitably used in order to distribute a binder sufficiently uniformly and to form a coating film of a slurry to a predetermined dimension. Specifically, for example, organic solvents such as dimethylformamide, N-methyl-2-pyrrolidone (NMP), dimethyl sulfoxide (DMSO), isopropyl alcohol, and acetone or water and the like may be used, and among these, one kind alone or a mixed solvent of two or more kinds may be used.

When polyvinylidene fluoride (PVDF) is used as a binder, as a dispersion medium, dimethylformamide and N-methyl-2-pyrrolidone (NMP) are preferable, and NMP is particularly preferable.

### (Current Collector and Positive Electrode)

A positive electrode can be produced by applying the slurry for electrode formation on a current collector and then drying. As a current collector, for example, an aluminum foil, a nickel foil, a titanium foil, a stainless steel foil and the like may be mentioned, and a rolled aluminum foil is particularly preferable.

As a method for applying a slurry for electrode formation to a current collector, generally used printing techniques can be used. When a coating film has a small thickness dimension, gravure printing and the like are used, and when it is large, printing techniques such as doctor blade printing and die printing are suitably used. Thereafter, the coating film is heated and dried, and any drying method can be used, and a method capable of realizing a binding strength by a desired binder is suitably used.

Then, thereafter, when forming to a predetermined dimension of a positive electrode, industrially available cutting blades and the like and methods thereof are suitably used. Further, in order to realize a predetermined density, industrially available pressurizing devices and methods thereof are suitably used as necessary.

### <Negative Electrode>

Next, a negative electrode will be described. A negative electrode is obtained, for example, by coating a slurry obtained by mixing a negative electrode active material, a conductive assistant, a binder, and a dispersion medium on a current collecting metal foil such as a rolled copper foil, heating and drying to remove a solvent, and then forming the resultant into a predetermined dimension and density.

### (Negative Electrode: Active Material)

As a negative electrode active material, one that can combine and stabilize lithium ions and electrons flowing from an external circuit and has many stabilization sites inside thereof is preferable. By way of example, those originating from an organic material are available regardless of whether crystallinity is high or low, and graphite, coke, amorphous carbon, hard carbon, polymer carbon and the like can be suitably used. In this case, as a principle, lithium ions are sandwiched between graphene layers and the like and are combined with electrons and stabilized. Further, as another stabilization mechanism, a method of electrochemically forming an intermetallic compound is also available, and silicon, tin, zinc, bismuth, antimony, cadmium, lead, germanium and the like can be suitably used. In addition, other materials that control a negative electrode side of a lithium ion battery and exhibit a low electrochemical reaction potential can also be used. Suitably, compounds of a metal and oxygen, sulfur, halogen, nitrogen, phosphorus and the like may be mentioned.

Specific examples of a negative electrode active material include compounds capable of reversible intercalation and deintercalation of lithium, including carbonaceous materials such as artificial graphite, natural graphite, graphitized carbon fibers, and amorphous carbon; metallic compounds capable of alloying with lithium, such as Si, Al, Sn, Pb, Zn, Bi, In, Mg, Ga, Cd, Si alloys, Sn alloys, or Al alloys; metal oxides capable of doping and dedoping lithium, such as SiOₓ (0<x≤2), SnO₂, vanadium oxide, and lithium vanadium oxide; and composites containing the metallic compounds and carbonaceous materials, such as Si-C composites or Sn-C composites and the like.

As a negative electrode active material, a lithium metal thin film may also be used. Further, as the carbonaceous material, both low crystalline carbon and high crystalline carbon may be used. Soft carbon and hard carbon are representative as low crystalline carbon, and as high crystalline carbon, amorphous, plate-like, scaly, spherical or fibrous natural graphite or artificial graphite, kish graphite, pyrolytic carbon, mesophase pitch-based carbon fibers, mesocarbon microbeads, mesophase pitch, and high-temperature fired carbons such as petroleum and coal-based cokes and the like may be mentioned.

Physical property values of a negative electrode material are determined from requirement items in device (for example, a storage battery) design and a manufacturing process due to constraint conditions such as a use form of a lithium ion battery and the like. In manufacturing materials, process design and the like are made so as to realize the physical properties. As physical property values, powder particle diameter and distribution, BET specific surface area, density and the like may be mentioned.

As an example, a powder particle diameter is appropriately selected in consideration of other constituent requirements of a lithium ion battery, and from a viewpoint of improving battery properties such as rate properties and cycle properties, for example, 1 µm to 70 µm is preferable and 3 µm to 30 µm is more preferable as an average value.

These negative electrode active materials can be used alone or in combination of two or more thereof. A ratio of a negative electrode active material in a slurry for electrode formation is, with respect to 100 parts by weight of a solid content excluding a dispersion medium, for example, in a range of 95.5 parts by weight to 99.5 parts by weight, preferably 96 parts by weight to 99 parts by weight, and more preferably 97 parts by weight to 98 parts by weight. When a content of a negative electrode active material is in this range, it is suitable in that battery capacity, electrical conductivity and adhesiveness are highly balanced.

### (Conductive Assistant)

The carbon material of the present invention may be used as a carbonaceous material as the negative electrode active material, but can be suitably used as a conductive assistant for the negative electrode active material. For example, although the negative electrode active material has generally high electron conductivity, depending on materials, when it has a smooth surface and contact between particles is insufficient, the carbon material of the present invention can be used as a conductive assistant that assists electron conductivity. Further, scaly graphite or artificial graphite as a negative electrode active material, although having high electron conductivity, has low ion storage property and is inferior in ion conductivity. For such properties, by combining with the carbon material of the present invention, a good battery reaction assistance system in which ion conductivity is added to electron conductivity can be constructed. Further, even in a state in which a three-dimensional structure of a negative electrode active material is crushed and flattened like scaly graphite, by adding the carbon material of the present invention, ion conductivity can be taken into consideration while retaining electron conductivity, which is suitable.

A ratio of the carbon material of the present invention in a slurry for electrode formation is, with respect to 100 parts by weight of a solid content excluding a dispersion medium, for example, in a range of 0.8 parts by weight to 3 parts by weight, preferably 1 part by weight to 2.5 parts by weight, and more preferably 1 part by weight to 2.2 parts by weight. When a content of the carbon material of the present invention is in this range, it is suitable in that rapid discharge property, life property, capacity property and charge-discharge property of a lithium ion secondary battery can be highly improved.

In the present invention, the carbon material of the present invention can be used in combination with other carbon materials. As other carbon materials, for example, acetylene black, Ketjen black, lamp black, furnace black, carbon black, graphite, carbon fiber, graphite fiber, nanofiber, nanotube, coke, hard carbon, amorphous carbon and the like may be mentioned.

These other carbon materials can be used alone or in combination of two or more thereof, and an amount to be used is selected depending on a purpose of use, and can be used in a range similar to that of the carbon material of the present invention. A use ratio of the carbon material of the present invention and other carbon materials is, as a weight ratio of [carbon material of the present invention]:[other carbon materials], for example, in a range of 10:90 to 90:10, preferably 20:80 to 80:20, more preferably 30:70 to 70:30, and even more preferably 40:60 to 60:40.

By using the carbon material of the present invention in combination with these conventional materials, a further effect can be obtained. For example, carbon nanotubes and the like having high linearity have high electron conductivity but low ion storage property. Therefore, by combining with the carbon material of the present invention, a good battery reaction assistance system in which ion conductivity is added to electron conductivity can be constructed. Further, carbon blacks such as acetylene black are composed of connection of structural particles having a diameter of several tens of nanometers. On the other hand, crystallinity of carbon is not so high, a structural length is also short, and since it is fragile, long-distance electron transfer is poor. Although having such properties, by combining with the carbon material of the present invention, a system that retains a three-dimensional structure and also has an ion supply capability can be realized.

### (Negative Electrode: Binder)

As a binder to be used, it is a component that aids in bonding among an electrode active material, a conductive assistant, and an electrode current collector, and for example, fluorine-based resins such as polyvinyl fluoride, polyvinylidene fluoride, and polytetrafluoroethylene, CN group-containing polymers such as polyacrylonitrile and polyvinylidene cyanide, polyvinyl alcohol-based polymers such as polyvinyl acetate and polyvinyl alcohol, halogen-containing polymers such as polyvinyl chloride and polyvinylidene chloride, conductive polymers such as polyaniline, alkane-based polymers such as polyethylene, polypropylene, and poly-1,1-dimethylethylene, unsaturated polymers such as polybutadiene and polyisoprene, polymers having a ring such as polystyrene, polymethylstyrene, polyvinylpyridine, and poly-N-vinylpyrrolidone, acrylic polymers such as polymethyl methacrylate, polyethyl methacrylate, polybutyl methacrylate, polymethyl acrylate, polyethyl acrylate, polyacrylic acid, polymethacrylic acid, and polyacrylamide, carboxymethyl cellulose, styrene butadiene rubber and the like may be mentioned. Further, it may be a modified product or a derivative of the organic polymer.

Among these binders, carboxymethyl cellulose, styrene butadiene rubber and the like are preferable.

These binders can be used alone or in combination of two or more thereof, and an amount to be used is appropriately selected depending on a purpose of use, and is, with respect to 100 parts by weight of a positive electrode active material, for example, in a range of 0.01 parts by weight to 4 parts by weight, preferably 0.05 parts by weight to 3 parts by weight, more preferably 0.1 parts by weight to 2.5 parts by weight, and even more preferably 0.2 parts by weight to 2 parts by weight. When an amount of a binder to be used is in this range, an adhesive force between electrode active materials and between an electrode active material and a conductive assistant can be improved, and consequently a bonding force with an electrode current collector can be improved, which is suitable.

These binders can be used alone or in combination of two or more thereof, and a ratio in a slurry for electrode formation is, with respect to 100 parts by weight of a solid content excluding a dispersion medium, for example, in a range of 0.5 parts by weight to 3 parts by weight, preferably 0.8 parts by weight to 2.5 parts by weight, and more preferably 1 part by weight to 2.2 parts by weight. When a content of a binder in a slurry for electrode formation is in this range, an adhesive force between electrode active materials and between an electrode active material and a conductive assistant can be improved, and consequently a bonding force with an electrode current collector can be improved, which is suitable.

### (Negative Electrode: Dispersion Medium)

As a dispersion medium to be used, a solvent generally used in the technical field can be used, and for example, organic solvents such as N-methyl-2-pyrrolidone (NMP), dimethyl sulfoxide (DMSO), isopropyl alcohol, and acetone or water and the like may be used, and among these, one kind alone or a mixed solvent of two or more kinds may be used. The dispersion medium is used to dissolve or disperse the electrode active material, a conductive assistant, and a binder in consideration of an application thickness of a slurry for electrode formation and a manufacturing yield.

### (Negative Electrode: Slurry)

An amount of a dispersion medium to be used is adjusted, for example, so that a concentration of a solid content containing an electrode active material, a conductive assistant, and a binder is, for example, in a range of 10% by weight to 90% by weight, preferably 20% by weight to 80% by weight, more preferably 30% by weight to 75% by weight, even more preferably 40% by weight to 70% by weight, and particularly preferably 50% by weight to 65% by weight.

### (Current Collector and Negative Electrode)

As a current collector for a negative electrode, for example, a material having no electrochemical reactivity with respect to a potential developed by a negative electrode is used. Specifically, a copper foil, a nickel foil, a titanium foil, a stainless steel foil and the like may be mentioned, and an electrolytic copper foil or a rolled copper foil is preferable.

Application of an electrode forming slurry on a current collector can utilize generally used printing techniques. When a thickness dimension is small, gravure printing or the like is used, and when it is large, printing methods such as doctor blade printing and die printing are suitably used.

Thereafter, a coating film is heated and dried, and any drying method can be used, and a method capable of realizing a bonding strength by a desired binder is suitably used. Then, when a negative electrode is subsequently formed to a predetermined dimension, industrially usable cutting blades and the like and a method thereof are suitably used. Further, in order to realize a predetermined density, industrially usable pressurizing devices and the like and a method thereof are suitably used as necessary.

### <Lithium Ion Secondary Battery>

Next, a lithium ion secondary battery according to the present invention will be described. A lithium ion secondary battery of the present invention is characterized by comprising a carbon material of the present invention. Specifically, it comprises a positive electrode, a negative electrode, a separator interposed between the positive electrode and the negative electrode, and an electrolyte, and at least one of the positive electrode and the negative electrode uses the electrode (positive electrode and/or negative electrode) of the present invention described above. On the other hand, a lithium ion secondary battery may optionally further comprise a battery container accommodating an electrode assembly composed of the positive electrode, the negative electrode, and the separator, and a sealing member for sealing the battery container. On the other hand, since the positive electrode and the negative electrode are the same as the contents described above, detailed description thereof will be omitted.

### (Separator)

A separator to be used separates a negative electrode and a positive electrode and provides a movement path for lithium ions, and can be used without particular limitation as long as it is normally used as a separation membrane in a lithium ion secondary battery, and in particular, one that is excellent in electrolyte solution impregnation ability while having low resistance to ion movement of an electrolyte is preferable.

Specifically, a porous polymer film may be mentioned, and for example, a porous polymer film produced from polyolefins such as polyethylene, polypropylene, polybutene, polyvinyl chloride, ethylene/butene copolymer, ethylene/hexene copolymer, and ethylene/methacrylate copolymer, or a laminated structure of two or more layers thereof may be used. Further, a normal porous nonwoven fabric, for example, a nonwoven fabric composed of high melting point glass fibers, polyethylene terephthalate fibers and the like may be used. Further, in order to ensure heat resistance or mechanical strength, a coated separation membrane containing a ceramic component or a polymer substance may be used, and may be used selectively in a single layer or multilayer structure.

As a material of a porous polymer film, polyethylene or polypropylene is particularly suitable. Polyethylene has a relatively low melting temperature, and when a temperature of a battery rises for some reason (for example, an unsafe state such as a short circuit and the like), pores in a membrane are closed by thermal melting, and by inhibiting movement of driving ions, a reaction can be stopped and safety can be ensured. Further, polypropylene is suitable as a material that can be stretched and made porous without using a plasticizer.

Further, a polymer compound can be applied to both surfaces of a separator and used. As such a polymer compound, for example, ether-based polymer compounds such as polyvinyl formal, polyethylene oxide, and crosslinked products containing polyethylene oxide, ester-based polymer compounds such as polymethacrylate, acrylate-based polymer compounds, fluorine-based polymer compounds such as polyvinylidene fluoride and vinylidene fluoride-hexafluoropropylene copolymer and the like may be mentioned. Among these, it is desirable to use a fluorine-based polymer compound such as polyvinylidene fluoride in particular, from a viewpoint of an effect of preventing swelling during high-temperature storage.

### (Electrolyte Solution)

As an electrolyte solution, for example, a non-aqueous electrolyte solution in which an electrolyte is dissolved in an organic solvent is used.

### -Electrolyte-

As an electrolyte, for example, a lithium salt is used. As a lithium salt, for example, LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, (C₂F₅SO₂)NLi, LiN(CF₃SO₂)(C₄F₉SO₂), LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₂(CF₃)₂, LiBF₂(C₂F₅)₂, LiBF₂(CF₃SO₂)₂, LiBF₂(C₂F₅SO₂)₂, Li cyclic 1,2-perfluoroethanedisulfonylimide, Li cyclic 1,3-perfluoropropanedisulfonylimide and the like may be mentioned. Among these, LiPF₆, LiBF₄, LiClO₄, CF₃SO₃Li, LiN(CF₃SO₂)₂, LiN(C₂F₅SO₂)₂ and the like are preferable because they are easily dissolved in a solvent and show a high degree of dissociation, and LiPF₆ and LiBF₄ are particularly preferable.

As an electrolyte, an electrolyte that has become gel-like by containing a polymer compound that swells with an organic solvent and serves as a holder for retaining a non-aqueous electrolyte may also be used. By containing a polymer compound that swells with an organic solvent, high ion conductivity can be obtained, excellent charge-discharge efficiency can be obtained, and leakage of a battery can be prevented, which is suitable. A content of such a polymer compound is preferably in a range of 0.1% by weight to 10% by weight of an electrolyte.

These electrolytes can be used alone or in combination of two or more thereof. A concentration of an electrolyte in an electrolyte solution is, for example, in a range of 5% by weight to 15% by weight, preferably 2% by weight to 13% by weight, and more preferably 5% by weight to 10% by weight.

### -Organic Solvent-

As an organic solvent to be used for an electrolyte solution, it is not particularly limited as long as it can dissolve the electrolyte, but for example, solvents such as cyclic carbonates; chain carbonates; esters such as γ-butyrolactone and methyl formate; ethers such as 1,2-dimethoxyethane and tetrahydrofuran; sulfur-containing compounds such as sulfolane and dimethyl sulfoxide and the like are suitably used. These organic solvents can be used alone or in combination of two or more thereof.

Among these, cyclic carbonates and chain carbonates having a high dielectric constant and suitable viscosity and solvation ability that affect movement of lithium ions are suitable. The solvation ability is a force for dissociating dissolved ions, and if it is too strong, an optimum value exists because it inhibits movement of ions.

As cyclic carbonates, for example, alkylene carbonates having an alkylene group having 2 to 4 carbon atoms, such as ethylene carbonate, propylene carbonate, and butylene carbonate may be mentioned. Among these, ethylene carbonate and propylene carbonate are preferable from a viewpoint of improving battery properties, and ethylene carbonate is particularly preferable.

As chain carbonates, for example, dialkyl carbonates are preferable, and a carbon number of an alkyl group constituting the same is preferably 1 to 5, and particularly preferably 1 to 4, respectively. Specifically, dialkyl carbonates such as symmetrical chain alkyl carbonates such as dimethyl carbonate, diethyl carbonate, and di-n-propyl carbonate; asymmetrical chain alkyl carbonates such as ethyl methyl carbonate, methyl-n-propyl carbonate, and ethyl-n-propyl carbonate and the like may be mentioned. Among these, dimethyl carbonate and diethyl carbonate are preferable from a viewpoint of viscosity and boiling point, and diethyl carbonate is particularly preferable.

Further, practical lithium ion batteries have a wide range of use environmental conditions, and in particular, physical properties such as melting point and boiling point of a non-aqueous solvent also need to be kept within a certain range, and it is preferable to use a mixture of cyclic carbonates and chain carbonates. As a combination of cyclic carbonates and chain carbonates, for example, a combination of ethylene carbonate and a chain carbonate is suitable. Specifically, ethylene carbonate and dimethyl carbonate, ethylene carbonate and diethyl carbonate, ethylene carbonate and dimethyl carbonate and diethyl carbonate, ethylene carbonate and dimethyl carbonate and ethyl methyl carbonate, ethylene carbonate and dimethyl carbonate and diethyl carbonate and ethyl methyl carbonate and the like are suitable because they have a good balance of cycle property and high-output discharge property.

A mixing ratio of cyclic carbonates and chain carbonates is appropriately selected depending on desired practical properties, and is, for example, as a weight ratio of [cyclic carbonates]:[chain carbonates], for example, in a range of 10:90 to 90:10, preferably 20:80 to 80:20, more preferably 30:70 to 70:30, and even more preferably 40:60 to 60:40.

As an organic solvent to be used for an electrolyte solution, fluorine-containing carbonates can also be suitably used. Specifically, cyclic carbonates having one fluorine atom, chain carbonates having one fluorine atom, cyclic carbonates having two or more fluorine atoms, chain carbonates having two or more fluorine atoms and the like may be mentioned, and from a viewpoint of improving battery properties, fluorine-containing cyclic carbonates having two or more fluorine atoms are preferable.

As specific examples of fluorine-containing cyclic carbonates having two or more fluorine atoms, for example, cis-4,5-difluoro-1,3-dioxolan-2-one, trans-4,5-difluoro-1,3-dioxolan-2-one, 4,4-difluoro-1,3-dioxolan-2-one and the like can be mentioned.

These fluorine-containing carbonates can be used alone or in combination of two or more thereof.

### (Method for Producing Lithium Ion Secondary Battery)

A lithium ion secondary battery according to the present invention can be produced, for example, by superimposing a positive electrode and a negative electrode with a separator interposed therebetween, winding or folding the same as necessary according to a battery shape and placing the same in a battery container, and injecting an electrolyte solution into the battery container and sealing the same. In order to prevent occurrence of a pressure increase inside a secondary battery, overcharge and overdischarge and the like, a fuse, an overcurrent prevention element such as a PTC element, an expanded metal, a lead plate and the like may be provided as necessary. A shape of a secondary battery may be any of, for example, a coin type, a button type, a sheet type, a cylindrical type, a prismatic type, a flat type and the like.

### <Applications>

The carbon material of the present invention can exhibit its functionality and be effectively used in any electrochemical device other than the lithium ion secondary battery. Specifically, it has functions such as a function as an intra-electrode conduction path when electron transfer is involved in a device reaction, a reinforcing function when an electrode and the like are accompanied by physical deformation, and a function of preventing direct contact by utilizing durability of a reaction material and graphene when a third material (such as a catalyst) takes an oxidized or reduced state.

As devices that can be used, for example, non-aqueous electrolyte batteries such as lithium ion batteries, sodium ion batteries, potassium ion batteries, magnesium ion batteries, calcium ion batteries, aluminum ion batteries, lithium sulfur batteries, and lithium air batteries; inorganic solid electrolyte batteries such as sulfide-based solid electrolytes and oxide-based solid electrolytes; polymer solid electrolyte batteries such as polyethylene oxide-based batteries; and semi-solid batteries represented by polymer gel electrolyte batteries in which an electrolyte solution is included in PVDF and the like may be mentioned.

In these devices, as a negative electrode active material, graphitizable carbon, non-graphitizable carbon, graphite, lithium alloy-based materials such as silicon and tin, and other metal-based materials such as lithium are used, and as a positive electrode active material, lithium-containing metal oxides, particularly lithium-containing transition metal oxides having a layered structure, a spinel structure or an olivine structure, lithium-free metal oxides, organic-based positive electrode materials, charge transfer complex-based positive electrode materials, sulfur, fluoride-based materials and the like are used, and the carbon material of the present invention can effectively enhance electrical conductivity for any of the active materials. Further, the carbon material of the present invention is also suitable as a material for lithium-sulfur batteries and the like described in WO2018/225619, JP2023-501679, JP2019-517116, JP2022-191280 and the like.

The carbon material of the present invention can also be suitably used in organic electrolyte capacitors, aqueous electrolyte capacitors, and aqueous solution batteries. In fuel cells, it can be used in PEFC, SOFC, DMPC and the like, and in particular, it can be used as a carrier for oxidation-reduction catalysts in addition to imparting electrical conductivity at electrodes.

The carbon material of the present invention can also be used for applications other than electrochemical devices. As other applications, for example, electronic device applications other than the above devices such as graphene-based sensors, electromagnetic interference suppression materials, antenna modules, heat dissipation substrates, heat exchange devices, separation membranes, reverse osmosis membranes, transparent electrode materials, structural material applications utilizing mechanical flexibility and the like, and conductive inks and pastes are also suitably used. Further, while weight reduction of a vehicle body directly linked to reduction of carbon dioxide emissions and energy saving is required, as applications leading to weight reduction utilizing a hollow shape and the like, it is also suitably used as a reinforcing agent for various rubbers including tires, paints, color pigments, conductive fillers for various polymers, additives for magnetic recording media and the like.

### EXAMPLES

Hereinafter, the present invention will be specifically described based on examples, but the present invention is not limited to these examples. In the following description, "%", "ppm" and "parts" expressing amounts are based on weight unless otherwise specified.

Various physical properties were evaluated according to the following methods.

### <Basic Properties>

### (Number of Layers of Carbonaceous Layer)

A number of layers of carbonaceous material of a carbon material was calculated from a carbon deposition amount during production of Examples and Comparative Examples. Specifically, it was obtained by performing thermogravimetric analysis (Thermogravimetric Analysis, TGA) measurement. Using STA-2500 (manufactured by NETZSCH), heating was performed to 900°C at a heating rate of 5°C/min under argon gas (80 mL/min) and oxygen (20 mL/min) flow, and then cooling was performed at a cooling rate of 20°C/min, and TG measurement was performed. A blank measurement result performed under the same temperature profile conditions using an empty pan, respectively, was subtracted. For those obtained using MgO, a Pt pan was used (Comparative Example 2), and for others, an alumina pan was used. From a carbon weight reduction ratio (%) obtained by TG measurement, an average number of layers of a carbon layer was calculated as follows. A weight W_{g} (g-carbon/g-template) of a carbon layer per unit mass of template was calculated from the carbon weight reduction rate, and a weight Wₐ (g/m²) of a carbon layer per unit area of template was calculated from this weight W_{g} of a carbon layer and a BET specific surface area SAₜₑₘₚ (g/m²) of template particles. Next, Wₐ was divided by a weight W_{graphene} (7.61×10⁻⁴ g/m²) of a carbon layer per unit area of single-layer graphene, and an average number of layers was calculated. Average number of layers = Wₐ /W_{graphene}

### (Purity Measurement)

A carbon content of a carbon material was calculated by subtracting an ash content described later and a temperature-programmed desorption gas amount converted to % display based on the following formula. Carbon content = 100 - 100 × (ash content + total gas amount calculated from temperature-programmed desorption gas)/carbon material amount

### <Nitrogen Adsorption-Desorption Measurement>

### (BET Specific Surface Area, Pore Volume, Mode Pore Diameter)

Nitrogen adsorption-desorption measurement of a carbon material was performed using an automatic specific surface area/pore distribution measurement apparatus (BELSORP MINI, manufactured by MicrotracBEL Corp.). A sample was dried under reduced pressure at 150°C for 6 hours using BEL pre before measurement. A BET specific surface area was obtained from an adsorption isotherm obtained by nitrogen adsorption-desorption measurement using a BET method. An application range of the BET method was P/P0 = 0.05 to 0.3. Based on an adsorption-desorption isotherm, a total pore volume was measured by converting a nitrogen adsorption amount at a relative pressure P/P0 = 0.99 at -196°C to a volume of liquid nitrogen density. A pore diameter distribution was obtained by a BJH method. In addition, a mode pore diameter of a pore diameter distribution was obtained.

The application range of each measured pore volume was as follows. Total pore volume: P/P0 = 0.99
Volume of micropores (pores having a pore diameter of less than 2 nm): P/P0 = ~ 0.1
Volume of mesopores (pores having a pore diameter in a range of 2 nm or more and 50 nm or less): P/P0 = 0.1 to 0.96
Volume of pores having a pore diameter of 10 nm or more: P/P0 = 0.79 to 0.99
Volume of macropores (pores having a pore diameter exceeding 50 nm): P/P0 = 0.96 to 0.99

### <Structural Analysis>

As one of indices showing complexity of a structure of a carbon material, there are a shape index and an aggregate shape determination method. A shape index is obtained by statistically analyzing various parameters obtained by image analysis from a transmission electron microscope image of a monodispersed material.

### (Transmission Electron Microscope Observation)

A shape of a carbon material was observed using a transmission electron microscope (JEM-2100Plus type, manufactured by JEOL Ltd.). Observation of a carbon material using a transmission electron microscope (TEM) was performed at an acceleration voltage of 80 kV to 100 kV.

### (Raman Spectroscopy)

Raman spectrum measurement of a carbon material was performed using a microscopic Raman apparatus (LabRAM HR-800, manufactured by HORIBA, Ltd.). For measurement, a 532 nm laser was used, a filter was set to D1, and a hole was set to 100 µm, and measurement was performed. A measurement range was 300 cm⁻¹ to 3500 cm⁻¹. From a measured Raman spectrum, an intensity ratio (I_{G}/I_{2D}) of an intensity (I_{G}) of a G band to an intensity (I_{2D}) of a 2D band was calculated.

### <Particle Properties>

### (Particle Size Distribution Measurement)

Using a laser diffraction particle size distribution measuring apparatus (MT3300EXII-SDC, manufactured by MicrotracBEL Corp.), particle size distribution measurement was performed, and an aggregation state of primary particles of a carbon material was examined. As a measurement sample, a carbon material immersed in ethanol in a stationary state for 9 minutes without pulverization was used. A median diameter D50, D10, D90, D90/D10, and D90/M in a particle size distribution curve were obtained.

### <General Properties>

### (Oil Absorption Measurement)

An oil absorption of a carbon material was in accordance with "JIS K5101-13-1 Pigment test methods - Part 13: Oil absorption - Section 1: Refined linseed oil method".

### (Number Density)

A number density (number per unit mass) P of a carbon material can be calculated from a volume V (m³) per one primary particle and a density ρ (g/m³) of carbon by the following formula. P = 1/(V × ρ)
Here, as a carbon density ρ, a true density of graphite of 2.2 g/cc can be used. V (m³) can be calculated from the following formula. V = n × (D₁ - D₀)³/6
Here, D₀ is an inner diameter of a primary particle, and D₁ is an outer diameter of a primary particle. As D₀, the mode pore diameter (M) described above can be used. D1 can be obtained by adding a value twice a value obtained by multiplying D₀ by an average number of layers n and an average interplanar spacing obtained from a 002 diffraction line to a mode diameter. Further, D₁ may also be obtained by TEM image analysis or the like. Further, in a solid carbon material, calculation may be performed with D₀ = 0. For example, for known DENKA BLACK Li-100, calculation was performed with an average primary particle diameter of 35 nm as a particle outer diameter (D₁) and D₀ = 0.

### (Apparent Density)

An apparent density of a carbon material was calculated from the following formula using a total pore volume and a true density. Apparent density (g/cc) = 1/(total pore volume + 1/true density)
A total pore volume (cc/g) is a value calculated at P/P0 = 0.99, and a true density is a value of graphite of 2.2 g/cc.

### (Measurement of Ash Content)

A carbon material was dried at 150°C for 2 hours under reduced pressure using a vacuum dryer, and then cooled, placed in a porcelain crucible, and weighed (Wₛ). Next, it was placed in a muffle furnace, a weight after combustion at 900°C for 1 hour was weighed (Wᵢ), a crucible tare (W_{c}) was subtracted, and an ash content ((Wᵢ - W_{c})/Wₛ × 100 (%)) was calculated.

Various performance evaluations were evaluated according to the following methods.

### <Conductivity Evaluation>

Conductivity evaluation of a carbon material was evaluated by measurement of electrical conductivity of a powder by side-constrained uniaxial compression. A cylindrical container composed of an insulating cylinder and a minus electrode was filled with a dried sample, a plus electrode was inserted into the insulating cylindrical container filled with the sample, the sample was sandwiched between the minus electrode and the plus electrode, and the sample was placed on a force gauge stand. A spring-type force gauge installed on the force gauge stand was lowered, a pressure of 10 MPa was applied to the sample in the cylindrical container, and the sample was compressed. A height of the compressed sample was measured, and a resistance value of the sample was measured with a digital multimeter connected to the plus electrode and the minus electrode. From the obtained resistance value, a filled cross-sectional area of the sample, and a compressed sample height, a conductivity of a powder at the time of compression was calculated. Evaluation was performed according to the following criteria. Very good (indicated by bullseye symbol (⊙)): 18 S/cm or more Good (indicated by circle symbol (o)): 15 S/cm or more and less than 18 S/cm
Fair (indicated by triangle symbol (Δ)): 12 S/cm or more and less than 15 S/cm
Poor (indicated by cross symbol (x)): less than 12 S/cm

### <Evaluation for Positive Electrode>

### (High Rate Property)

At room temperature (25°C), energization (constant current charge) was performed from an open circuit voltage to 4.2 V at a constant current of 1.25 mA (corresponding to 0.2C) per test battery, and after reaching 4.2 V, constant voltage charge was performed and continued until 0.31 mA (0.05C) was reached. Thereafter, discharge was performed to 3 V at a constant current of 1.25 mA (corresponding to 0.2C). A charge capacity and a discharge capacity at this time were obtained, and an initial coulombic efficiency (discharge capacity ÷ charge capacity) was calculated. Next, using the same test battery, energization (constant current charge) was performed from an open circuit voltage to 4.2 V at a constant current of 1.25 mA (corresponding to 0.2C), and after reaching 4.2 V, constant voltage charge was performed and continued until 0.31 mA (0.05C) was reached. Thereafter, discharge was performed to 3 V at a constant current of 12.5 mA (corresponding to 2C) which is a high rate. From a discharge capacity of an obtained test battery, a 2C maintenance ratio ((2C capacity/0.2C capacity) × 100) (%) of each test battery was obtained. A higher numerical value indicates superior high-rate property. Results are shown in Table 1. Further, discharge curves when discharge was performed at a discharge current value corresponding to 2C and a discharge current value corresponding to 0.2C using a test battery of Example 1 are shown in FIG. 5.

Rapid discharge property was evaluated according to the following criteria based on the obtained 2C maintenance rate. Very good (indicated by bullseye symbol (⊙)): exceeding 70% Good (indicated by circle symbol (o)): exceeding 50% to 70% Fair (indicated by triangle symbol (Δ)): exceeding 30% to 50% Poor (indicated by cross symbol (x)): 30% or less

Charge capacity property was evaluated according to the following criteria based on an average charge capacity. Very good (indicated by bullseye symbol (⊙)): 160 mAh/g or more Good (indicated by circle symbol (o)): 150 mAh/g or more and less than 160 mAh/g
Fair (indicated by triangle symbol (Δ)): 140 mAh/g or more and less than 150 mAh/g
Poor (indicated by cross symbol (x)): less than 140 mAh/g

Discharge capacity property was evaluated according to the following criteria based on an average charge capacity. Very good (indicated by bullseye symbol (⊙)): 140 mAh/g or more
Good (indicated by circle symbol (o)): 130 mAh/g or more and less than 140 mAh/g
Fair (indicated by triangle symbol (Δ)): 120 mAh/g or more and less than 130 mAh/g
Poor (indicated by cross symbol (x)): less than 120 mAh/g

Charge-discharge property was evaluated according to the following criteria based on an initial coulombic efficiency. Very good (indicated by bullseye symbol (⊙)): 80% or more Good (indicated by circle symbol (o)): 70% or more and less than 80%
Fair (indicated by triangle symbol (Δ)): 60% or more and less than 70%
Poor (indicated by cross symbol (x)): less than 60%

### <Example 1>

### (Production of Carbon Material)

### -CVD Reaction: Carbon Layer Formation-

About 1 g of fumed silica (SiO₂, model number: AEROSIL (registered trademark) NX90G, average primary particle diameter 38 nm, BET specific surface area 71 m²/g, carbon content 0.5% to 1.5%, manufactured by Nippon Aerosil Co., Ltd.) as a template (template material) of a carbonaceous film was spread on a quartz boat and set in the center of a quartz reaction tube of a horizontal CVD apparatus (transparent electric furnace manufactured by Ishikawa Sangyo Co., Ltd.). While flowing argon gas into the inside of the reaction tube at a flow rate of 400 mL/min, heating was performed to 900°C at a heating rate of 10°C/min and held for 30 minutes. While maintaining 900°C, while flowing argon gas at a flow rate of 320 mL/min, methane gas was flowed at a flow rate of 80 mL/min (raw material gas concentration 20%), and held for 90 minutes to form a carbonaceous layer. Thereafter, while flowing argon gas at a flow rate of 400 mL/min, cooling was performed to room temperature, and a template on which a carbonaceous layer was formed was taken out. At this time, it was confirmed by an electron microscope that the template was an aggregate in which primary particles were connected in a bead-like manner with a plurality of branched structures.

### -Template Removal-

Next, a template was removed from a template on which a carbonaceous layer was formed by the following operation, and a carbon material was obtained.
(1) A template on which a carbonaceous material was formed was collected in a 100 mL capacity PFA beaker, and ultrapure water was added to such an extent that the entire sample was wetted.
(2) After adding 46% hydrofluoric acid, stirring was performed for 2 hours with a stirrer.
(3) After stopping stirring, the mixture was allowed to stand until the sample settled.
(4) Using a PTFE membrane filter (47 mm φ, pore diameter 0.1 µm), suction filtration was performed from a supernatant liquid.
(5) A sample on filter paper was washed with about 39 mL of ultrapure water and suction-filtered. This operation was repeated 3 times.
(6) A sample on filter paper was collected in the original PFA beaker.
(7) Operations (2) to (6) were repeated again.
(8) About 40 mL of ultrapure water was added, and stirring was performed for 1 hour with a stirrer.
(9) After stopping stirring, the mixture was allowed to stand until the sample settled.
(10) A supernatant liquid was discarded, 5% caustic soda was added, and stirring was performed for 12 hours while heating to 80°C.
(11) After stopping stirring, the mixture was allowed to stand until the sample settled.
(12) Using a PTFE membrane filter (47 mm φ, pore diameter 0.1 µm), suction filtration was performed from a supernatant liquid.
(13) A sample on filter paper was washed with ultrapure water and suction-filtered. This operation was repeated until a filtrate (washing liquid) became neutral.
(14) A sample on filter paper was collected in a petri dish and dried in a dryer at 110°C for 8 hours.

### -Heat Treatment-

A carbon material obtained as described above was placed in a square-shaped high-temperature heating furnace (manufactured by Izumi Tech Co., Ltd.), placed under reduced pressure (on the order of 10⁻¹ Pa), and then heated to 1800°C at a heating rate of 15°C/min under argon gas flow (10 mL/min), held at the temperature for 1 hour, and fired. Thereafter, cooling was performed to room temperature, a carbon material after firing was taken out, and a carbon material A containing heat-treated graphene was obtained. Using the obtained carbon material A, basic properties, nitrogen adsorption-desorption measurement, Raman spectroscopy, XRD analysis, image analysis, particle size distribution measurement, TDP-MS measurement, general properties, and conductivity evaluation were performed, and the results thereof are shown in Table 1.

### (Production of Positive Electrode)

96.5% of a ternary positive electrode material NCM powder (LiNi_{0.5}Co_{0.2}Mn_{0.3}O, manufactured by Kelong Co., Ltd.) having an average particle diameter of 8 µm as a positive electrode active material, 0.5% of the carbon material A obtained as described above as a conductive assistant, and 3% by weight of PVDF (manufactured by Kureha Corporation) as a binder were added to N-methyl-pyrrolidone (NMP) which is a solvent and mixed. As a conductive assistant, a dispersion liquid in which the carbon material A was dispersed in an NMP solvent was used. A mixture of the active material, the conductive assistant, and PVDF was placed in a planetary mixer, and NMP was added in several portions at a rotation speed of 2000 rpm and kneaded until uniform, and a positive electrode agent slurry was prepared. This was applied to an aluminum foil having a thickness of 15 µm at a constant speed using a doctor blade type coating apparatus with a micrometer. Thereafter, drying was performed in a vacuum dryer set at 110°C, and a positive electrode base material was obtained. Thereafter, the positive electrode base material was punched with a punch type punching machine of φ 15 mm, pressurized at 45 kN using a cylinder type jig, and then vacuum-dried at 120°C to obtain a positive electrode for battery incorporation.

### (Production of Lithium Ion Secondary Battery)

Using a positive electrode produced as described above and metal lithium punched to φ16 mm in a glove box in an argon gas atmosphere, a positive electrode mixture layer and metal lithium were opposed with a separator having a thickness of 25 µm (microporous membrane made of polypropylene) interposed therebetween, a 1M LiPF₆ solution (1:1 mixed solvent of ethylene carbonate (EC):diethyl carbonate (DEC)) was added as an electrolyte solution, and crimping and sealing were performed to produce a 2032 size coin-type test battery. Thereafter, washing was performed with ethanol, and the battery was subjected to battery evaluation. Evaluation results are shown in Table 1.

### <Example 2>

A carbon material B containing graphene was obtained in the same manner as in Example 1 except that a CVD reaction time was 40 minutes, and a 2032 size coin-type battery was produced using this carbon material B. Using the obtained carbon material B and a test battery, material property measurement, conductivity evaluation, and battery evaluation were performed, and the results thereof are shown in Table 1.

### <Example 3>

A carbon material C containing graphene was obtained in the same manner as in Example 1 except that a CVD reaction time was 60 minutes, and a 2032 size coin-type battery was produced using this carbon material C. Using the obtained carbon material C and a test battery, material property measurement, conductivity evaluation, and battery evaluation were performed, and the results thereof are shown in Table 1.

### <Example 4>

A carbon material D containing graphene was obtained in the same manner as in Example 1 except that a CVD reaction time was 80 minutes, and a 2032 size coin-type battery was produced using this carbon material D. Using the obtained carbon material D and a test battery, material property measurement, conductivity evaluation, and battery evaluation were performed, and the results thereof are shown in Table 1.

### <Example 5>

A carbon material E containing graphene was obtained in the same manner as in Example 1 except that a CVD reaction time was 130 minutes, and a 2032 size coin-type battery was produced using this carbon material E. Using the obtained carbon material E and a test battery, material property measurement, conductivity evaluation, and battery evaluation were performed, and the results thereof are shown in Table 1.

### <Example 6>

A carbon material F containing graphene was obtained in the same manner as in Example 1 except that fumed silica (SiO₂, model number: AEROSIL (registered trademark) R972, average primary particle diameter 25 nm, BET specific surface area 111 m²/g, carbon content 0.6% to 1.2%, manufactured by Nippon Aerosil Co., Ltd.) was used as a template and a CVD reaction time was 120 minutes, and a 2032 size coin-type battery was produced using this carbon material F. Using the obtained carbon material F and a test battery, material property measurement, conductivity evaluation, and battery evaluation were performed, and the results thereof are shown in Table 1.

### <Comparative Example 1>

A carbon material G containing graphene was obtained in the same manner as in Example 1 except that alumina (Al₂O₃, model number: RURALOX SBa200, average primary particle diameter 7 nm, BET specific surface area 202 m²/g, manufactured by SASOL) was used as a template, and a 2032 size coin-type battery was produced using this carbon material G. Using the obtained carbon material G and a test battery, material property measurement, conductivity evaluation, and battery evaluation were performed, and the results thereof are shown in Table 1.

### <Comparative Example 2>

A carbon material H was obtained in the same manner as in Example 1 except that magnesia (MgO, model number: Kyowa Mag MF150, average primary particle diameter 30 nm, BET specific surface area 129 m²/g, manufactured by Kyowa Chemical Industry Co., Ltd.) was used as a template and a template removal operation was performed as described below, and a 2032 size coin-type battery was produced using this carbon material H. Using the obtained carbon material H and a test battery, material property measurement, conductivity evaluation, and battery evaluation were performed, and the results thereof are shown in Table 1.

### (Template Removal of MgO)

1 g to 1.4 g of a template on which a carbonaceous material was formed, about 100 g of hydrochloric acid (FUJIFILM Wako Pure Chemical Corporation, 5 mol/L), and a stirring bar were placed in a Teflon (registered trademark) beaker, stirred at room temperature for 5 hours, and then washed with pure water 5 times while filtering a sample using a membrane filter (0.1 µm), and suction-filtered. At this time, sufficient care was taken so that an adhering substance on filter paper did not dry. Next, the adhering substance was placed in a glass beaker containing about 100 mL of acetone. This beaker was covered with aluminum foil, held in a vacuum dryer at a vacuum pressure of 0.06 MPa for 2 minutes, then returned to normal pressure, and heated in a constant temperature bath at 60°C for 10 minutes to perform acetone replacement. A supernatant liquid in the beaker was taken out with a pipette, the same acetone replacement operation was performed once more, and vacuum drying was performed at 150°C for 6 hours to obtain a carbon material H containing graphene after template removal.

### <Comparative Example 3>

A 2032 size coin-type battery was produced in the same manner as in Example 1 except that commercially available carbon black (model number: DENKA BLACK Li-100, manufactured by Denka Company Limited) was used as a carbon material. Material property measurement, conductivity evaluation, and battery evaluation were performed, and the results thereof are shown in Table 1.

**[Table 1]**

| | | | | Example 1 | Example 2 | Example 3 | Example 4 | Example 5 | Example 6 |
|---|---|---|---|---|---|---|---|---|---|
| | | | | Carbon Material A | Carbon Material B | Carbon Material C | Carbon Material D | Carbon Material E | Carbon Material F |
| Production Conditions | | | | | | | | | |
| | Template | | | | | | | | |
| | | Material | | SiO₂ | SiO₂ | SiO₂ | SiO₂ | SiO₂ | SiO₂ |
| | | Model Number | | NX90G | NX90G | NX90G | NX90G | NX90G | R972 |
| | | Average Primary Particle Diameter | nm | 38 | 38 | 38 | 38 | 38 | 25 |
| | | BET Specific Surface Area | m²/g | 71 | 71 | 71 | 71 | 71 | 111 |
| | | Carbon Content | % | 0.5~1.5 | 0.5~1.5 | 0.5~1.5 | 0.5~1.5 | 0.5~1.5 | 0.6~1.2 |
| | CVD Reaction | | | | | | | | |
| | | Temperature | °C | 900 | 900 | 900 | 900 | 900 | 900 |
| | | Time | min | 90 | 40 | 60 | 80 | 130 | 120 |
| | Carbon Deposition Amount | | % | 17.8 | 10.5 | 13.4 | 15.6 | 21.7 | 26.2 |
| Properties of Carbon Material | | | | | | | | | |
| | Basic Properties | | | | | | | | |
| | | Number of Layers of Carbonaceous Layer | layers | 3.5 | 1.9 | 2.5 | 3 | 4.5 | 3.9 |
| | | Carbon Content (Purity) | % | 99.7 | 99.0 | 99.4 | 99.5 | 99.5 | 99.7 |
| | Nitrogen Adsorption-Desorption Measurement | | | | | | | | |
| | | BET Specific Surface Area | m²/g | 906 | 986 | 946 | 1020 | 817 | 899 |
| | | Total Pore Volume | cc/g | 4.34 | 2.95 | 5.62 | 5.35 | 3.81 | 3.47 |
| | | Volume Ratio of Mesopores | % | 64 | 72 | 51 | 57 | 61 | 62 |
| | | Volume Ratio of Macropores | % | 28 | 16 | 43 | 37 | 31 | 29 |
| | | Volume Ratio of Pores Having Pore Diameter of 10 nm or More | % | 77 | 62 | 81 | 79 | 78 | 72 |
| | | Mode Pore Diameter (M) | nm | 23.8 | 16.2 | 21.3 | 23.0 | 24.4 | 15.8 |
| | Raman Spectroscopy | | | | | | | | |
| | | I_{G}/I_{2D} | - | 1.79 | 1.20 | 1.43 | 1. 67 | 2.08 | 1.74 |
| | Particle Size Distribution Measurement | | | | | | | | |
| | | D10 | µm | 12 | 13 | 15 | 13 | 12 | 11 |
| | | D50 | µm | 30 | 45 | 40 | 35 | 26 | 28 |
| | | D90 | µm | 49 | 55 | 53 | 52 | 45 | 45 |
| | | D90/D10 | - | 4.1 | 4.2 | 3.7 | 4.2 | 3.8 | 4.1 |
| | | D90/M | - | 2.1 | 3.4 | 2.5 | 2.3 | 1.8 | 2.8 |
| | General Properties | | | | | | | | |
| | | Oil Absorption | mL/100g | 1889 | 703 | 1140 | 1678 | 2280 | 2201 |
| | | Number Density | pieces/g | 3.8x10¹⁷ | 1.6x10¹⁸ | 6.8x10¹⁷ | 4.8x10¹⁷ | 2.8x10¹⁷ | 8.6x10¹⁷ |
| | | Apparent Density | g/cc | 0.209 | 0.294 | 0.165 | 0.172 | 0.234 | 0.256 |
| | | Ash Content | ppm | 1910 | 1980 | 1950 | 1930 | 1880 | 2010 |
| Performance Evaluation | | | | | | | | | |
| | Electrical Conductivity | | - | ⊙ | ○ | ⊙ | ⊙ | ⊙ | ⊙ |
| | Battery Properties | | | | | | | | |
| | | Rapid Discharge Property | - | ⊙ | ○ | ⊙ | ⊙ | ⊙ | ⊙ |
| | | Charge Capacity Property | - | ⊙ | ○ | ⊙ | ⊙ | ⊙ | ⊙ |
| | | Discharge Capacity Property | - | ⊙ | ○ | ⊙ | ⊙ | ⊙ | ⊙ |
| | | Charge-Discharge Property | - | ⊙ | ⊙ | ⊙ | ⊙ | ⊙ | ⊙ |

| | | | | Comparative Example 1 | Comparative Example 2 | Comparative Example 3 |
|---|---|---|---|---|---|---|
| | | | | Carbon Material G | Carbon Material H | Li-100 |
| Production Conditions | | | | | | |
| | Template | | | | | |
| | | Material | | Al₂O₃ | MgO | - |
| | | Model Number | | SBa200 | MF-150 | - |
| | | Average Primary Particle Diameter | nm | 7 | 30 | - |
| | | BET Specific Surface Area | m²/g | 202 | 129 | - |
| | | Carbon Content | % | <0.1 | <0.1 | - |
| | CVD Reaction | | | | | |
| | | Temperature | °C | 900 | 900 | - |
| | | Time | min | 120 | 120 | - |
| | Carbon Deposition Amount | | % | 15.1 | 12.3 | - |
| Properties of Carbon Material | | | | | | |
| | Basic Properties | | | | | |
| | | Number of Layers of Carbonaceous Layer | layers | 1.5 | 1.9 | - |
| | | Carbon Content (Purity) | % | 99.4 | 99.0 | - |
| | Nitrogen Adsorption-Desorption Measurement | | | | | |
| | | BET Specific Surface Area | m²/g | 1747 | 1032 | **65** |
| | | Total Pore Volume | cc/g | 2.40 | 1.98 | 0.26 |
| | | Volume Ratio of Mesopores | % | 72 | 80 | 44 |
| | | Volume Ratio of Macropores | % | **3** | **2** | 45 |
| | | Volume Ratio of Pores Having Pore Diameter of 10 nm or More | % | **13** | 37 | 73 |
| | | Mode Pore Diameter (M) | nm | 6.6 | 9.6 | - |
| | Raman Spectroscopy | | | | | |
| | | I_{G}/I_{2D} | - | 0.73 | 0.86 | 2.07 |
| | Particle Size Distribution Measurement | | | | | |
| | | D10 | µm | 19 | 15 | 6 |
| | | D50 | µm | 39 | 65 | 24 |
| | | D90 | µm | 79 | 180 | 70 |
| | | D90/D10 | - | 4.2 | 12.0 | 11.6 |
| | | D90/M | - | 12.0 | 18.7 | - |
| | General Properties | | | | | |
| | | Oil Absorption | mL/100g | 430 | 492 | 303 |
| | | Number Density | pieces/g | 1.1x10¹⁹ | 4.2x10¹⁸ | 9.8x10¹⁵ |
| | | Apparent Density | g/cc | 0.351 | 0.411 | 1.401 |
| | | Ash Content | ppm | 2250 | 6220 | 2600 |
| Performance Evaluation | | | | | | |
| | Electrical Conductivity | | - | Δ | **x** | **x** |
| | Battery Properties | | | | | |
| | | Rapid Discharge Property | - | Δ | Δ | **x** |
| | | Charge Capacity Property | - | **x** | Δ | Δ |
| | | Discharge Capacity Property | - | Δ | Δ | **x** |
| | | Charge-Discharge Property | - | Δ | ⊙ | ⊙ |

| | | | | | | |
|---|---|---|---|---|---|---|
| (Note) Underlined bold descriptions shown in the table indicate that they are outside the preferable range of the present invention. | | | | | | |

From Table 1, it can be seen that the carbon materials A to F of the present invention are formed by a carbonaceous outer shell having a graphene structure and have pores, a BET specific surface area is in a range of 817 m²/g or more and 1020 m²/g or less, a total pore volume is in a range of 2.95 cc/g or more and 5.62 cc/g or less, a volume ratio of pores having a pore diameter of 10 nm or more in the total pore volume is in a range of 62% or more and 81% or less, a volume ratio of macropores which are pores having a pore diameter exceeding 50 nm is in a range of 16% or more and 43% or less, and when a mode pore diameter is 15.8 nm or more and 24.4 nm or less and is in a mesopore region of 2 nm or more and 50 nm or less, electrical conductivity is excellent, and any properties of rapid discharge property, battery capacity property and charge-discharge property when used in a lithium ion secondary battery can be significantly improved (comparison between Examples 1 to 6 and Comparative Examples 1 to 3).

Regarding electrical conductivity, the carbon materials A to F of the present invention are overwhelmingly superior to the carbon materials G to H of Comparative Examples 1 to 2 and the carbon black of Comparative Example 3. This is considered to be because the carbon materials A to F of the present invention are formed by a carbonaceous outer shell having a graphene structure with high electron conductivity, and moreover, have a structure in which large pores such as pores having a pore diameter of 10 nm or more and macropores (pores having a pore diameter exceeding 50 nm) are connected, and an efficient electron conduction path could be formed (comparison between Examples 1 to 6 and Comparative Examples 1 to 2). Further, this is considered to be that an effective conduction path for electron conductivity is formed even from a value of an apparent density of the carbon material of the present invention.

Regarding rapid discharge property, it can be seen that the carbon materials A to F of the present invention have remarkably higher BET specific surface area, total pore volume and mesopore volume as compared with the carbon black of Comparative Example 3, and not only a difference in electron conductivity of the carbon material itself but also ion conductivity is imparted, and the property is significantly improved (comparison between Examples 1 to 6 and Comparative Example 3). On the other hand, the carbon materials G to H of Comparative Examples 1 to 2 are inferior in rapid discharge performance despite having large total pore volume and mesopore volume. This is considered to be because pores possessed by the carbon materials G to H are mostly pores having a pore diameter of less than 10 nm, large pores of 10 nm or more are few, and moreover, macropores having a pore diameter exceeding 50 nm are hardly present at 2% to 3%, and therefore ion conductivity was not improved (comparison between Examples 1 to 6 and Comparative Examples 1 to 2).

A difference between the carbon materials A to F of the present invention and the carbon materials G and H of Comparative Examples 1 and 2 is also that it can be seen that an intensity ratio (I_{G}/I_{2D}) of an intensity (I_{G}) of a G band to an intensity (I_{2D}) of a 2D band as measured by Raman spectroscopy is smaller in the carbon materials G to H than in the carbon materials A to F. An intensity ratio I_{G}/I_{2D} is also called a stacking index, and when an intensity ratio I_{G}/I_{2D} is 0.2, it is considered to have one graphene layer, and as a value becomes larger, a number of layers increases. Therefore, it is considered that the carbon materials G to H of Comparative Examples 1 to 2 could not maintain large pores such as macropores having a pore diameter exceeding 50 nm because a number of layers of carbonaceous graphene surrounding pores is smaller as compared with the carbon materials A to F (comparison between Examples 1 to 6 and Comparative Examples 1 to 2).

Regarding rapid discharge property, it can be further seen that it is preferable as an oil absorption of a carbon material is larger. The carbon materials A to F of the present invention have an overwhelmingly large numerical value of oil absorption as compared with the carbon materials of Comparative Examples 1 to 3, and therefore can retain a large amount of an electrolyte solution, and it is considered that ion conductivity was thereby improved (comparison between Examples 1 to 6 and Comparative Examples 1 to 3).

Regarding battery capacity property, it can be seen that the carbon materials A to F of the present invention are overwhelmingly superior in both charge capacity and discharge capacity. This is considered to be that the carbon materials A to F of the present invention have both properties of electron conductivity and ion conductivity, and a difference was made from the carbon materials G to H of Comparative Examples 1 to 2 which hardly have pores having a pore diameter of 10 nm or more, particularly macropores having a pore diameter exceeding 50 nm, and the carbon black of Comparative Example 3 which is solid and has no pores (comparison between Examples 1 to 6 and Comparative Examples 1 to 3). Further, it is considered that a difference in a number per unit mass also affected this property.

Regarding charge-discharge property, it can be seen that the carbon materials A to F of the present invention have good results as compared with the carbon material G of Comparative Example 1 (comparison between Examples 1 to 6 and Comparative Example 1). The carbon material G shows a large value exceeding 2 cc/g in total pore volume, but a pore volume of less than 10 nm is mostly, and a volume ratio of pores having a pore diameter of 10 nm or more in the total pore volume is only 13%, and this is considered to have affected a movement speed of lithium ions.

From Table 1, it can also be seen that in a method for producing a carbon material, when a carbon-containing inorganic compound is used as a template, a carbon deposition amount on a template surface is larger, which is suitable for production of a carbon material (comparison between Comparative Examples 1 to 2 and Examples 1 to 6). Specifically, in a CVD reaction at 900°C for 120 minutes, Comparative Example 1 has a carbon deposition amount on a template surface of 15.1% and Comparative Example 2 has 12.3%, but in the case of Example 4, a deposition amount of the same amount or more (15.6%) could be achieved in 80 minutes at 900°C. Further, although not shown in this specification, when silica having a carbon content below a detection limit was used as a template, a deposition rate of carbon was slow under similar conditions.

### <Example 7>

A test battery was manufactured under the same conditions as in Example 1 except that in production of a positive electrode, a blending amount of the carbon material A was 0.1% by weight and a blending amount of a positive electrode material NCM was 96.9%.

### <Example 8>

A test battery was manufactured under the same conditions as in Example 1 except that in production of a positive electrode, a blending amount of the carbon material A was 0.3% by weight and a blending amount of a positive electrode material NCM was 96.7%.

### <Example 9>

A test battery was manufactured under the same conditions as in Example 1 except that in production of a positive electrode, a blending amount of the carbon material A was 1% by weight and a blending amount of a positive electrode material NCM was 96%.

### <Example 10>

A test battery was manufactured under the same conditions as in Example 1 except that in production of a positive electrode, a blending amount of the carbon material A was 2% by weight and a blending amount of a positive electrode material NCM was 95%.

### <Example 11>

A test battery was manufactured under the same conditions as in Example 1 except that in production of a positive electrode, a blending amount of the carbon material A was 3% by weight and a blending amount of a positive electrode material NCM was 94%.

### <Example 12>

A test battery was manufactured under the same conditions as in Example 1 except that in production of a positive electrode, a blending amount of the carbon material A was 4% by weight and a blending amount of a positive electrode material NCM was 93%.

### <Example 13>

A test battery was manufactured under the same conditions as in Example 1 except that in production of a positive electrode, a blending amount of the carbon material A was 6% by weight and a blending amount of a positive electrode material NCM was 91%.

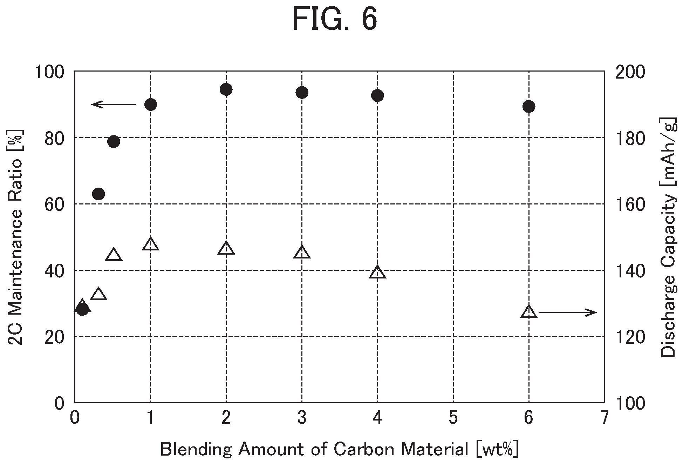

A charge-discharge test was performed on test batteries of Example 1, Examples 7 to 13, and Comparative Example 3. At room temperature (25°C), energization (constant current charge) was performed to 4.2 V at a constant current of 1.25 mA (corresponding to 0.2C) per test battery, and after reaching 4.2 V, constant voltage charge was performed and continued until 0.31 mA (0.05C) was reached. Thereafter, discharge was performed to 3 V at a constant current of 1.25 mA (corresponding to 0.2C). A charge capacity and a discharge capacity at this time were obtained. Results thereof are shown in Table 2 and FIG. 6. FIG. 6 is a diagram showing a relationship of a blending amount of a carbon material with a 2C maintenance ratio and a discharge capacity in test batteries of Example 1 and Examples 7 to 13.

**[Table 2]**

| | Type of Carbon Material | Oil Absorption [mL/100g] | Blending Amount [wt%] | Battery Properties | | |
|---|---|---|---|---|---|---|
| | | | | 2C Maintenance Ratio [%] | Charge Capacity [mAh/g] | Discharge Capacity [mAh/g] |
| Example 1 | Carbon Material A | 1889 | 0.5 | 79 | 165 | 145 |
| Example 7 | Carbon Material A | 1889 | 0.1 | 28 | 154 | 129 |
| Example 8 | Carbon Material A | 1889 | 0.3 | 63 | 157 | 133 |
| Example 9 | Carbon Material A | 1889 | 1 | 90 | 167 | 148 |
| Example 10 | Carbon Material A | 1889 | 2 | 95 | 167 | 147 |
| Example 11 | Carbon Material A | 1889 | 3 | 94 | 166 | 146 |
| Example 12 | Carbon Material A | 1889 | 4 | 93 | 165 | 140 |
| Example 13 | Carbon Material A | 1889 | 6 | 90 | 163 | 128 |
| Comparative Example 1 | **Li-100** | 303 | 0.5 | **19** | 146 | 122 |

| | | | | | | |
|---|---|---|---|---|---|---|
| (Note) Underlined bold descriptions shown in the table indicate that they are outside the preferable range of the present invention. | | | | | | |

From Table 2 and FIG. 6, in a range of blending amounts of the carbon material of Example 1 and Examples 7 to 13, a 2C maintenance ratio of a test battery improved while a blending amount of the carbon material was from 0.1% by weight to 2.0% by weight, and maintained a maximum value while a blending amount of the carbon material was from 2.0% by weight to 4.0% by weight, but decreased when a blending amount of the carbon material was excessively increased to 6.0% by weight. A discharge capacity of a battery also increases as a blending amount of a carbon material increases, but when a blending amount excessively increases, an active material content decreases and a discharge capacity of an electrode decreases.

### <Example 14>

The carbon material A of Example 1 was blended in a negative electrode, and a negative electrode test battery was manufactured. 97% of artificial graphite, 1% of the carbon material A of Example 1, 1% of carboxymethyl cellulose, and 1% of styrene butadiene rubber (SBR) were stirred and mixed so as to be uniform using distilled water as a solvent, and a negative electrode agent slurry was prepared. An obtained slurry was applied on a copper foil having a thickness of 20 µm, dried at 110°C, then punched to φ15 mm, pressurized at 30 kN, and made into a negative electrode. An obtained negative electrode was vacuum-dried at 120°C, and then in a glove box in an argon gas atmosphere, using a 1M LiPF₆ solution (1:1 mixed solvent of ethylene carbonate (EC):diethyl carbonate (DEC)) as an electrolyte solution and using a polypropylene separator, a 2032 size coin-type test battery with a metal Li counter electrode was produced.

Energization was performed to 0 V at a constant current of 1.23 mA (corresponding to 0.2C) per test battery, and after reaching 0 V, constant voltage charge was performed and continued until 0.31 mA (0.05C) was reached. Thereafter, discharge was performed to 1.5 V at a constant current of 1.23 mA. A discharge capacity at this time was obtained. Next, using the same test battery, energization was performed to 0 V at a constant current of 1.23 mA (corresponding to 0.2C), and after reaching 0 V, constant voltage charge was performed and continued until 0.31 mA (0.05C) was reached. Thereafter, discharge was performed to 1.5 V at a constant current of 12.3 mA (corresponding to 2C) which is a high rate. A 2C maintenance ratio ((2C capacity/0.2C capacity) × 100) was obtained from a discharge capacity of a test battery obtained in the evaluation test described above. As a result of evaluating an obtained negative electrode battery, a 2C maintenance ratio was 47%.

### <Comparative Example 4>

A negative electrode test battery was manufactured in the same manner as in Example 14 except that instead of the carbon material A of Example 1, commercially available carbon black (model number: DENKA BLACK Li-100, manufactured by Denka Company Limited) was used as a conductive assistant, and an addition amount of this conductive assistant to a negative electrode was 1%. As a result of evaluating an obtained negative electrode battery, a 2C maintenance ratio was 16%.

As is clear from the examples described above, a 2C maintenance ratio (rapid discharge property) in a battery using a carbon material of the present invention is high as compared with a maintenance ratio in a battery of Comparative Example 4. A reason therefor is derived from high electron conductivity and ion conductivity of a carbon material of the present invention. That is, this is because a carbon material of the present invention has a skeleton of highly conductive carbonaceous material containing graphene as compared with a conductive assistant used in a battery of Comparative Example 4, and has a space capable of holding an electrolyte solution inside particles. A discharge reaction is a reaction in which lithium ions desorbed by charge return to a positive electrode material, and when discharge starts, electrons flow from an external circuit to a positive electrode, and the electrons and lithium ions combine and return to a crystal structure site of a positive electrode, and restore a bonding state before charge. That is, bonding of lithium ions and electrons and a phase change of a crystal structure of a positive electrode occur simultaneously. A phase change can be observed from a change in voltage. Regarding a high maintenance ratio of high-rate discharge, this "simultaneity" of phase change is important, and it was confirmed that a carbon material of this example can realize this "simultaneity".

The present invention is not limited to the embodiments and examples described above. Various forms with design changes within a scope not departing from a scope of the present invention are included in the present invention.

## Claims

1. A carbon material comprising: a carbonaceous outer shell having a graphene structure; and pores, wherein
a BET specific surface area is in a range of 100 m²/g or more and 2500 m²/g or less,
a total pore volume measured by nitrogen adsorption-desorption measurement is 0.30 cc/g or more, a volume ratio of pores having a pore diameter of 10 nm or more in the total pore volume is 30% or more, a volume ratio of macropores being pores having a pore diameter exceeding 50 nm is 5% or more, and a mode pore diameter is in a mesopore region of 2 nm or more and 50 nm or less.

2. The carbon material according to claim 1, wherein an intensity ratio (I_{G}/I_{2D}) of an intensity (I_{G}) of a G band to an intensity (I_{2D}) of a 2D band as measured by Raman spectroscopy is in a range of 1.0 or more and 10 or less.

3. The carbon material according to claim 1, wherein a number per unit mass of the carbon material is in a range of 1.0×10¹⁶ pieces/g or more and 1.0×10¹⁹ pieces/g or less.

4. The carbon material according to claim 1, wherein an apparent density represented by 1/(the total pore volume + 1/true density) is 1.00 g/cc or less.

5. The carbon material according to claim 1, wherein an ash content in the carbon material is 5000 ppm or less.

6. The carbon material according to claim 1, for use in a lithium ion secondary battery.

7. A method for producing the carbon material according to any one of claims 1 to 6, comprising:
forming a carbonaceous layer on a surface of a template composed of an aggregate of a fumed compound; and
removing the template.

8. A conductive assistant for a battery electrode, comprising the carbon material according to any one of claims 1 to 6.

9. A dispersion liquid comprising the carbon material according to any one of claims 1 to 6, and a dispersion medium containing the carbon material dispersed therein.

10. An electrode composition comprising the carbon material according to any one of claims 1 to 6, an active material, and a binder.

11. An electrode slurry comprising the electrode composition according to claim 10, and a solvent containing the electrode composition dispersed therein.

12. An electrode comprising the carbon material according to any one of claims 1 to 6.

13. A lithium ion secondary battery comprising the carbon material according to any one of claims 1 to 6.
